(19) Europäisches Patentamt
European Patent Office
Office européen des brevets

(11) Veröffentlichungsnummer: **0 323 399 B1**

# (12) EUROPÄISCHE PATENTSCHRIFT

(45) Veröffentlichungstag der Patentschrift: **17.02.93**

(51) Int. Cl.$^5$: **D06L 3/12**

(21) Anmeldenummer: **88810794.3**

(22) Anmeldetag: **18.11.88**

## (54) Aufhellerdispersion.

(30) Priorität: **27.11.87 CH 4630/87**

(43) Veröffentlichungstag der Anmeldung:
**05.07.89 Patentblatt 89/27**

(45) Bekanntmachung des Hinweises auf die Patenterteilung:
**17.02.93 Patentblatt 93/07**

(84) Benannte Vertragsstaaten:
**CH DE ES FR GB IT LI**

(56) Entgegenhaltungen:
**CH-A- 597 336**
**GB-A- 1 051 814**
**US-A- 3 575 866**

(73) Patentinhaber: **CIBA-GEIGY AG**
**Klybeckstrasse 141**
**CH-4002 Basel(CH)**

(72) Erfinder: **Anceschi, Italo**
**Lachmattstrasse 73**
**CH-4132 Muttenz(CH)**
Erfinder: **Fringeli, Werner, Dr.**
**In den Kurzen 2**
**CH-4242 Laufen(CH)**
Erfinder: **Jöllenbeck, Martin, Dr.**
**Südstrasse 20**
**W-5650 Solingen 11(DE)**
Erfinder: **Mahler, Georges**
**Rue de Kembs 4**
**F-68100 Mulhouse(FR)**
Erfinder: **Schürings, Willy**
**Auweg 5**
**W-7889 Grenzach-Wyhlen(DE)**

EP 0 323 399 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine wässrige Aufhellerdispersion und deren Herstellung sowie deren Verwendung zum optischen Aufhellen von Polyester/Cellulose-fasermaterialien.

Die neuen Aufhellerdispersionen sind temperaturstabil bis 40 °C und bis zu sechs Monaten lagerstabil, weisen somit eine Temperatur- und Lagerstabilität auf und können den Polyester- und Celluloseanteil von Polyester/Cellulose-Mischfasern in einer Applikationsstufe gleichzeitig aufhellen und ergeben nach der Applikation hervorragende Weissgrade.

Die erfindungsgemässen Formulierungen zeichnen sich gegenüber Formulierungen wie sie z.B. in der GB-A-1 051 814 beschrieben sind durch eine höhere Lagerbeständigkeit und eine breitere Palette an verwendbaren optischen Aufhellern aus. Gegenüber den in der CH-A-597 336 beschrieben bieten die erfindungsgemässen Formulierungen durch die Mischung wasserlöslicher/wasserunlöslicher optischer Aufheller zudem den Vorteil Polyester/Cellulose-Mischfasern in einer Applikationsstufe gleichzeitig aufzuhellen.

Gegenstand der Erfindung sind somit neue wässrige Aufhellerdispersionen enthaltend 3 bis 20 % mindestens eines wasserunlöslichen oder schwerlöslichen optischen Aufhellers, 4 bis 20 % mindestens eines wasserlöslichen optischen Aulhellers, 5 bis 25 % Lösungsvermittler, 2 bis 20 % mindestens eines anionischen, kationischen und/oder nichtionogenen Dispergiermittels, 0,1 bis 10 % weitere Hilfsmittel und zusätzlich 1 bis 20 % eines Copolymerisats von 1-Vinyl-2-pyrrolidon mit 3-Vinylpropionsäure.

Alle %-Angaben beziehen sich hier und im folgenden auf Gew. %. Von besonderem Interesse sind Dispersionen, die 5-10 % wasserunlösliche oder schwerlösliche Aufheller, 4-10 % wasserlösliche Aufheller, 2-5 % Dispergiermittel, 10-25 % Lösungsvermittler, 3-6 % Copolymerisat von 1-Vinyl-2-pyrrolidon mit 3-Vinylpropionsäure und 0,1-5 % weitere Hilfsmittel enthalten.

Bei den wasserunlöslichen oder schwerlöslichen optischen Aufhellern handelt es sich um Verbindungen oder Mischungen von Verbindungen z.B. aus der Klasse der Stilbene, Distyryl-benzole, Distyryl-biphenyle, Triazinyle, Benzoxazole, Bis-benzoxazole, Bis-benzoxazolylthiophene, Bis-benzoxazolylnaphthalin, Pyrene, Cumarine und Naphthalin-peri-dicarbonsäureimide. Besonders bevorzugte Verbindungen entsprechen den Formeln

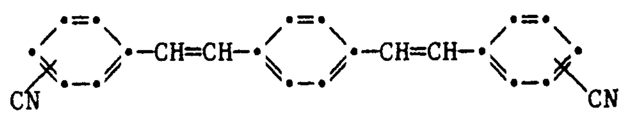

(1)

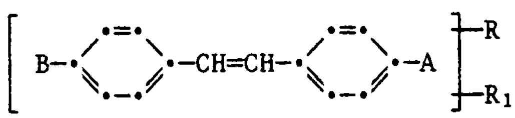

(2)

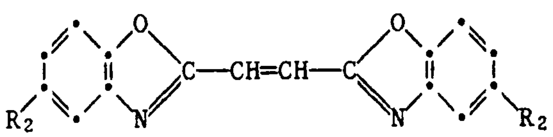

(3)

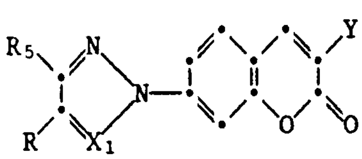

(4)

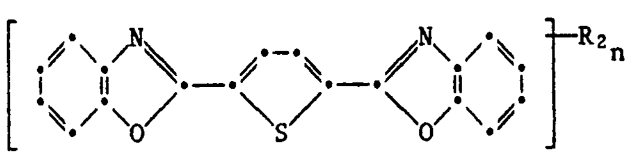

(5)

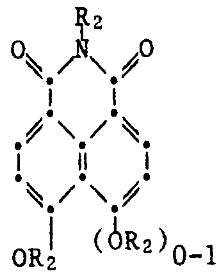

(6)

worin

A = 2-Benzoxazolyl, -CH=CH-CN, -CH=CH-COOR$_2$, -COOR$_2$ oder Halogen,
B = Phenyl falls A 2-Benzoxazolyl,
B = -CH=CH-CN falls A -CH=CH-CN,
B = -CH=CH-COOR$_2$ falls A -CH=CH-COOR$_2$,
B = 2-Benzoxazolyl falls A -COOR$_2$,
B = Naphthalin-triazolyl falls A Halogen oder -COOR$_2$,
B = 1,2,4-Oxadiazol falls A 2-Benzoxazolyl
und
R = H, $C_1$-$C_4$-Alkyl
$R_1$ = H, $C_1$-$C_4$-Alkyl und CN
$R_2$ = $C_1$-$C_4$-Alkyl
$R_5$ = $C_1$-$C_4$-Alkyl oder Phenyl
$X_1$ = C, N
Y = Phenyl oder ein Rest der Formel

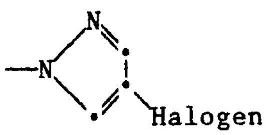

und
n = die Zahlen 0 bis 2

bedeutet.

Von besonderem Interesse sind die Verbindungen der Formel:

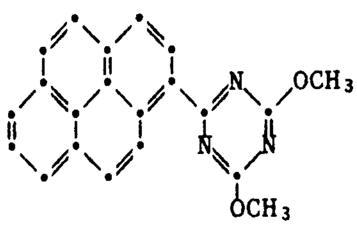

(7)

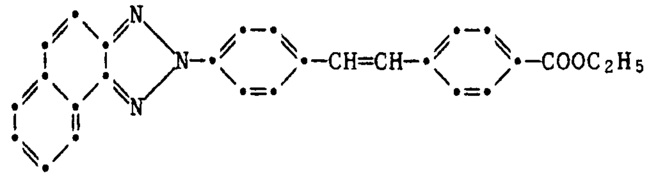

(8)

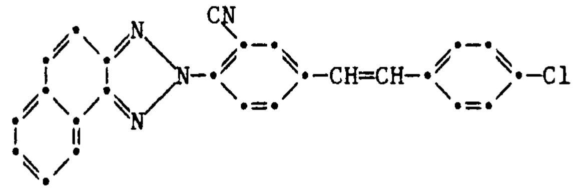

(9)

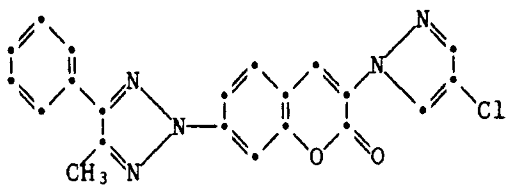

(10)

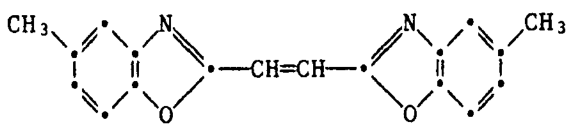

(11)

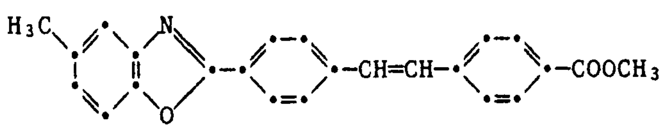

(12)

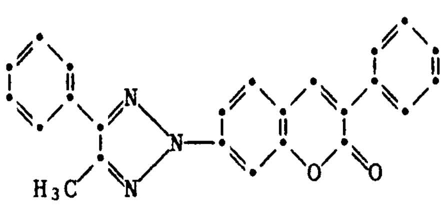

(13)

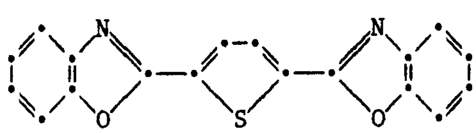

(14)

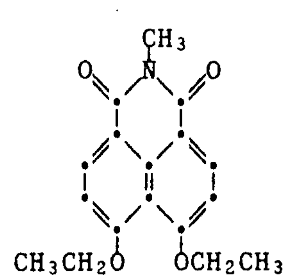

(15)

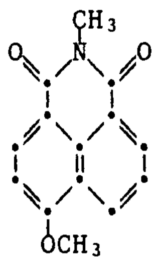

(16)

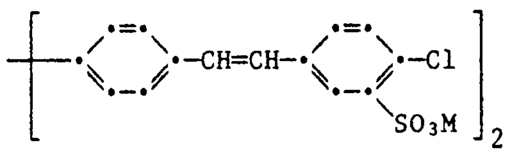

(17)

mit

M = Li, Na, K

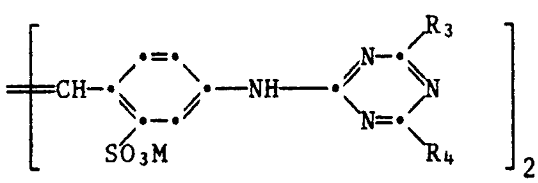

(18)

mit $R_3=R_4=$ -NH- 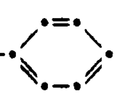 oder

$R_3=$ -NH- 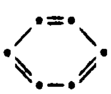, und $R_4=$ 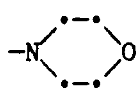

und

M = Li, Na, K oder Ammonium

sowie die Mischungen I bis VI:

I 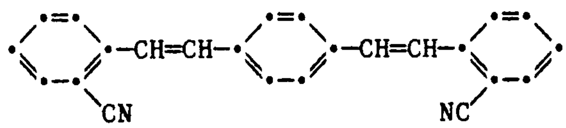 80 %

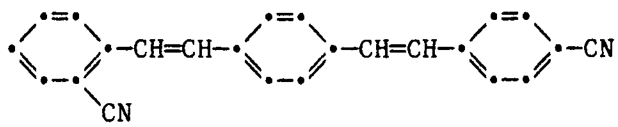 20 %

II 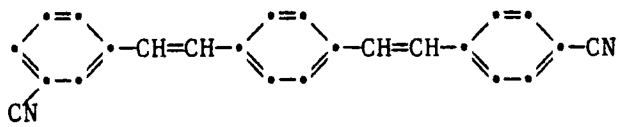 80 %

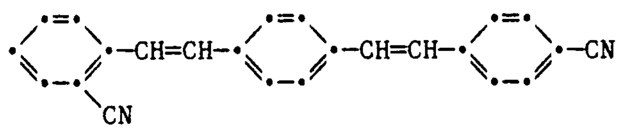 20 %

III 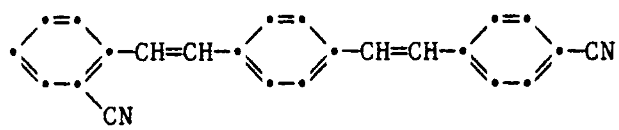 27 %

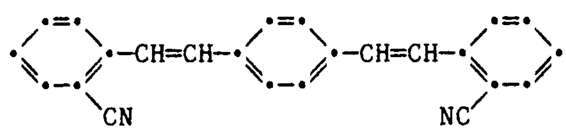 13 %

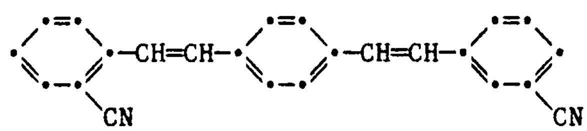 60 %

IV 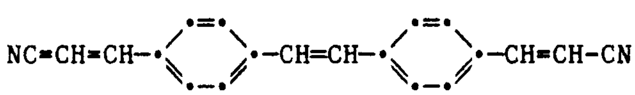 20 % resp. 40 %

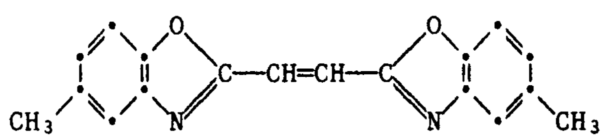 80 % resp. 60 %

V

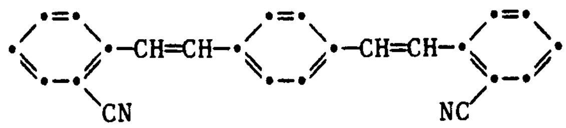

40 %

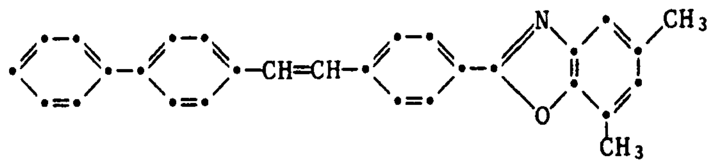

60 %

VI

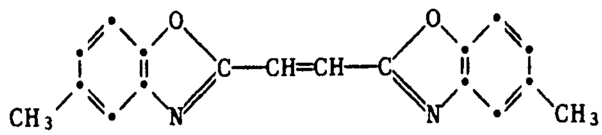

85 %

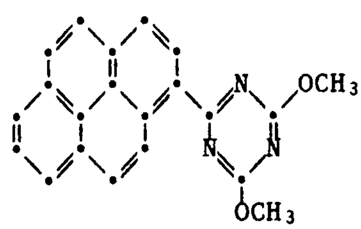

15 %

Bei den wasserlöslichen Aufhellern handelt es sich um Verbindungen oder Mischungen von Verbindungen z.B. aus der Klasse Bis-triazinyl-diamino-stilbene,Distyryl-biphenyle, Triazolyl-stilbene wie z.B. die Verbindungen der Formel:

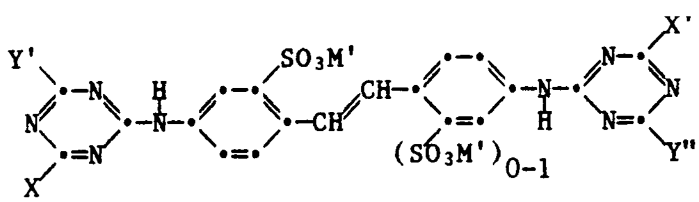

(19)

mit

X, X′ = Anilin, Anilin-3-sulfosäure, Anilin-4-sulfosäure, Anilin-2,5-disulfosäure oder deren Salze oder Methanol

Y′, Y″ = Anilin, Ethanolamin, Diethanolamin N-Methyl-ethanolamin, Diisopropanolamin, Ethylamin, Diethylamin, Morpholin, Diethylenglykol, Propylenglykol, Aminoethansulfosäure oder deren Salze, Ethanol-aminopropion-säureamid, Cyanoethylbenzylamin, Cyanoethylethanolamin

M′ = H, Li, Na, K, Ammonium oder $C_1$-$C_4$-Alkylammonium

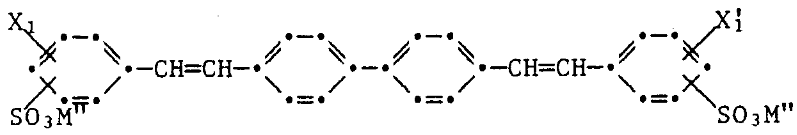

(20)

mit

$X_1$, $X_1'$ = H oder Cl

$M''$ = H, Ammonium oder $C_1$-$C_4$-Alkylammonium und gegebenenfalls Li, Na, K

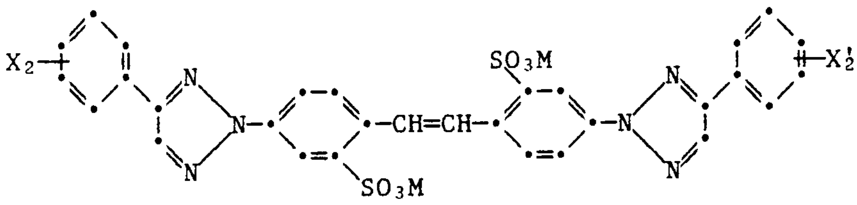

(21)

mit

$X_2$, $X_2'$ = H, $SO_3M$

und

M = Li, Na, K, Ammonium oder $C_1$-$C_4$-Alkylammonium

Von besonderem Interesse sind Kombinationen von Verbindungen der Formel (19) mit Verbindungen der Formel (3) und/oder (5) sowie den Mischungen II, III, V und/oder VI.

Das Verhältnis von wasserlöslichen zu wasserunlöslichen bzw. schwerlöslichen Aufhellern wird bestimmt durch das Verhältnis von Polyester zu Cellulose des aufzuhellenden Polyester/Cellulose-Mischmaterials. Im allgemeinen werden 0,15-0,25 % des wasserlöslichen Aufhellers pro 100 % Cellulose und 0,15-0,25 % des wasserunlöslichen bzw. schwerlöslichen Aufhellers pro 100 % Polyester eingesetzt.

Bei den kationischen, anionischen und/oder nichtionogenen Dispergiermitteln handelt es sich um die üblichen Dispergiermittel für wasserunlösliche bzw. schwerlösliche Aufheller.

Als anionische Dispergiermittel sind beispielsweise genannt Kondensationsprodukte von aromatischen Sulfonsäuren mit Formaldehyd sowie Ligninsulfonate. Besonders geeignet sind Formaldehyd-Kondensationsprodukte mit Naphthalinsulfonsäure sowie Dihexyl-sulfosuccinate.

Als kationische Dispergiermittel kommen zum Beispiel quaternäre Fettaminpolyglykolether in Frage.

Vorzugsweise werden jedoch nichtionogene Dispergiermittel eingesetzt. In Frage kommen zum Beispiel: Ethylenoxid-Addukte aus der Klasse der Anlagerungsprodukte von Ethylenoxid an höhere Fettsäuren, gesättigte oder ungesättigte Fettalkohole, Mercaptane, Fettsäureamide, Fettsäurealkylolamide oder Fettamine oder an Alkylphenole oder Alkylthiophenole mit mindestens 7 Kohlenstoffatomen im Alkylrest, wobei auf 1 Mol der genannten Verbindungen bevorzugt 5 bis 100 Mol Ethylenoxid kommen, sowie Ethylenoxid-Propylenoxid-Blockpolymere. Einzelne der Ethylenoxideinheiten können durch andere Epoxide, wie z.B. Styroloxid oder insbesondere Propylenoxid ersetzt sein.

Als Ethylenoxid-Addukte sind im einzelnen genannt:

a) Umsetzungsprodukte von gesättigten und/oder ungesättigten Fettalkoholen mit 8 bis 20 C-Atomen, mit 5 bis 100 Mol Ethylenoxid (EO) je Mol Alkohol, vorzugsweise gesättigte lineare $C_{16}$-$C_{18}$ Alkohole mit 10 bis 80 insbesondere 25 Mol Ethylenoxid je Mol Alkohol;

b) Umsetzungsprodukte von gesättigten und/oder ungesättigten Fettsäuren mit 8 bis 20 C-Atomen mit 5 bis 20 Mol Ethylenoxid je Mol Säure, vorzugsweise Rizinusölethoxylat;

c) Umsetzungsprodukte von Alkylphenolen mit 7 bis 12 C-Atomen im Alkylrest mit 5 bis 25 Mol Ethylenoxid je Mol phenolische Hydroxylgruppe, vorzugsweise Mono- oder Dialkylphenole mit 10 bis 20 Mol Ethylenoxid je Mol phenolische Hydroxylgruppe;

d) Umsetzungsprodukte von gesättigten und/oder ungesättigten Fettsäureamiden mit 8 bis 20 C-Atomen mit 5 bis 20 Mol Ethylenoxid je Mol Säureamid, vorzugsweise Oelsäureamide mit 8 bis 15 Mol Ethylenoxid je Mol Säureamid;

e) Umsetzungsprodukte von gesättigten und/oder ungesättigten Fettaminen mit 8 bis 20 C-Atomen mit 5 bis 20 Mol Ethylenoxid je Mol Amin, vorzugsweise Oleylamine mit 8 bis 15 Mol Ethylenoxid je Mol Amin;

f) Ethylenoxid-Propylenoxid (EO-PO) Blockpolymere mit 10-80 % Ethylenoxid und Molekulargewichten von 1000 bis 80000;

g) Ethylenoxid-Propylenoxid-Addukte an Ethylendiamin.

Von diesen sind die unter a) und f) genannten bevorzugt. Auch Gemische der Ethylenoxid-Addukte nach a) bis g) untereinander sind verwendbar.

Unter Lösungsvermittler, die vor allem für die wasserlöslichen optischen Aufheller eingesetzt werden, sind hydrotrope Mittel wie z.B Polyethylenglykole vorzugsweise mit Molgewichten zwischen 200 und 40000 insbesondere 1000 bis 6000 sowie Harnstoff, Tetramethylharnstoff, Triethanolamin, Diethylenglykol, Propylenglykol, Cumol-, Xylol-, Benzol-sulfonate, Mono-, Di- und Polyethylenglykol-mono- und diethylester sowie

-etheracetate zu verstehen.

Es ist dabei von grossem Vorteil, dass sowohl die Dispergiermittel als auch die Lösungsvermittler mit der Aufhellerdispersion verträglich sind, d.h. dass keine Ausfällungen erfolgen und dass homogene Dispersionen vorliegen.

Des weiteren enthält die erfindungsgemässe Aufhellerdispersion weitere Hilfsmittel beispielsweise Textilhilfsmittel, Nuancierfarbstoffe, schaumdämpfende Mittel, insbesondere Gefrierschutzmittel wie z.B. Polyole insbesondere Di- oder Polyalkohole wie Ethylenglykol, Propylenglykol, Diethylenglykol, Glycerin und/oder Sorbit, Feuchthaltemittel, und/oder Antimikrobica wie z.B. Chloracetamid oder wässrige Formalinlösungen sowie Fungizide.

Erfindungswesentlich ist, dass die Aufhellerdispersion ein Copolymerisat von 1-Vinyl-2-pyrrolidon mit 3-Vinylpropionsäure enthält. Diese Copolymerisate sind bekannt und können nach bekannten Methoden hergestellt werden.

Bei dem verwendeten 1-Vinyl-2-pyrrolidon handelt es sich um die Verbindung der Formel

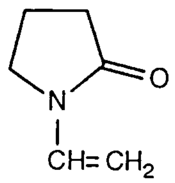

Eine besonders bevorzugte Aufhellerdispersion enthält 5-10 % wasserunlöslichen bis schwerlöslichen optischen Aufheller aus der Klasse der Bisbenzoxazolyl-thiophen-aufheller, 4-10 % wasserlöslichen optischen Aufheller aus der Klasse der Bistriazinyl-di-amino-stilbendisulfonsäureaufheller, 2-5 % ethoxylierten $C_{16}$-$C_{18}$-Fettalkohol oder Ethylenoxid-Propylenoxid-Blockpolymere als Dispergiermittel, 3-6 % Copolymerisat von 1-Vinyl-2-pyrrolidon mit 3 Vinylpropionsäure, 14-16 % Polyethylenglykol oder 10-25 % Harnstoff als Lösungsvermittler, 0-0,5 % Nuancierfarbstoff und 0,1-0,5 % Formaldehyd als weitere Hilfsmittel.

Die Herstellung der erfindungsgemässen Aufhellerdispersion erfolgt z.B. a) durch Mischen der separat hergestellten und formierten Einzelkomponenten - bevorzugt werden die separat formierten wasserunlöslichen oder wasserschwerlöslichen Aufheller und die separat formierten wasserlöslichen Aufheller gemischt - oder b) durch gemeinsame Formierung der Einzelkomponenten z.B. durch Mahlung in einer Mikrosol-, Perl-, Sand-, oder Dynomühle auf eine Korngrösse der Teilchen von kleiner als 5 µm.

Verwendung finden die neuen Aufhellerdispersionen vor allem zum optischen Aufhellen von Polyester/Cellulose-fasermaterial vorzugsweise von Polyester/Baumwollgewebe, indem man die erfindungsgemässe Aufhellerdispersion in einem einstufigen Applikationsverfahren auf das Fasermaterial aufträgt. "Einstufig" heisst hier, dass gemäss der Aufhellerdispersion der wasserunlösliche bzw. wasserschwerlösliche optische Aufheller gleichzeitig mit dem wasserlöslichen optischen Aufheller appliziert wird. Die Applikation erfolgt vor allem mittels des Ausziehverfahrens oder auch des Foulardverfahrens im schwach sauren bis stark alkalischem Medium.Ein besonderer Vorteil dieses Verfahrens ist, dass der Polyester- und der Celluloseanteil des Materials gleichzeitig aufgehellt wird.

Die nachfolgenden Beispiele erläutern die Erfindung, ohne sie darauf zu beschränken. Prozente und Teile bedeuten Gewichtsprozente bzw. -teile.

Beispiel 1

15 Teile der Aufhellermischung aus 60 % des schwerlöslichen Aufhellers der Formel

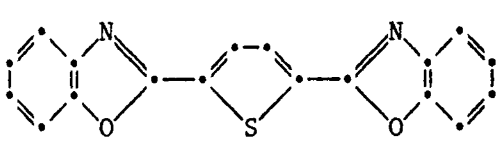

und 40 % des wasserlöslichen Aufhellers der Formel

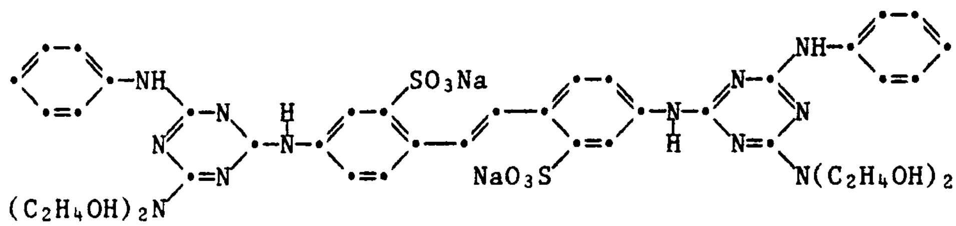

2 Teile $C_{16}$-$C_{18}$-Fettalkohol mit 25 EO,
15 Teile Polyethylenglykol 4000,
0.3 Teile eines Anthrachinonfarbstoffs
0.5 Teile Formaldehyd (37 %),
14 Teile 30 %iges wässriges 1-Vinyl-2-pyrrolidon/3-Vinylpropionsäure-Copolymerisat und
53.2 Teile Wasser werden in einer Rührwerkskugelmühle mit Glasperlen gemahlen, bis die Aufhellerdispersion eine Korngrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 2

18 Teile der Aufhellermischung aus 43 % des schwerlöslichen Aufhellers der Formel

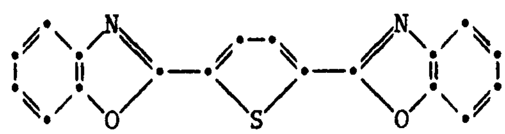

und 57 % des wasserlöslichen Aufhellers der Formel

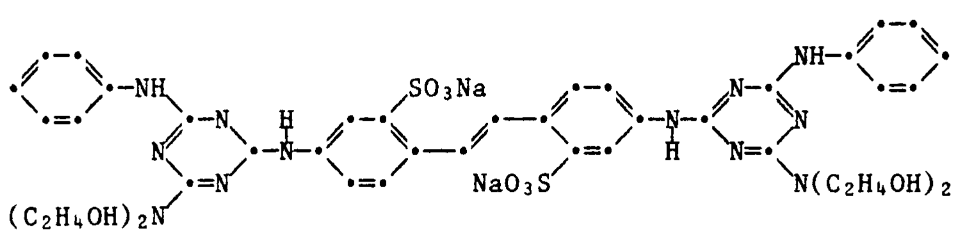

2 Teile $C_{16}$-$C_{18}$-Fettalkohol mit 25 EO,
20 Teile Polyethylenglykol 4000,
0.5 Teile Formaldehyd (37 %),
10 Teile 30 %iges wässriges 1-Vinyl-2-pyrrolidon/3-Vinylpropionsäure-Copolymerisat und
49.5 Teile Wasser werden in einer Rührwerkskugelmühle mit Glasperlen gemahlen, bis die Aufhellerdispersion eine Korngrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 3

15 Teile der Aufhellermischung aus 60 % des schwerlöslichen Aufhellers der Formel

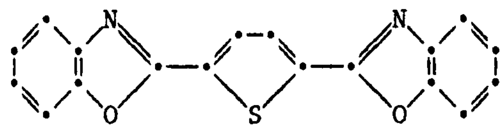

und 40 % des wasserlöslichen Aufhellers der Formel

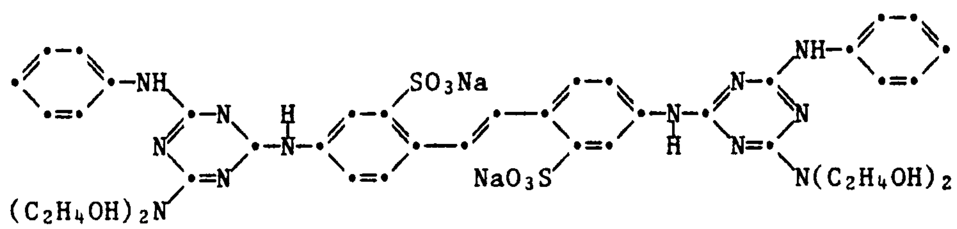

2 Teile eines EO-PO-Blockpolymeren mit 80 % EO und einem Molekulargewicht von ca. 16,000,
15 Teile Harnstoff,
0.3 Teile eines Anthrachinon-Farbstoffs
0.5 Teile Formaldehyd (37 %),
14 Teile 30 %iges wässriges 1-Vinyl-2-pyrrolidon/3-Vinylpropionsäure-Copolymerisat und
53.2 Teile Wasser werden in einer Rührwerkskugelmühle mit Glasperlen gemahlen, bis die Aufhellerdispersion eine Korngrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 4

15 Teile der Aufhellermischung aus 60 % des schwerlöslichen Aufhellers der Formel

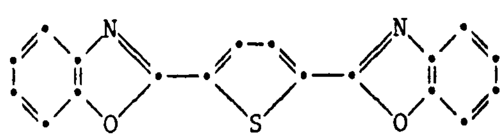

und 40 % des wasserlöslichen Aufhellers der Formel

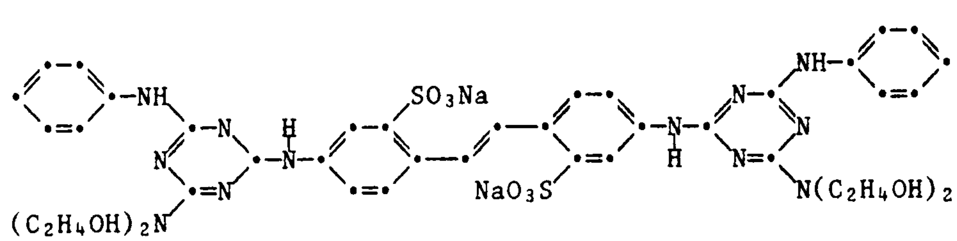

2 Teile eines EO-PO-Blockpolymeren mit 10 % EO und einem Molekulargewicht von ca. 1060,
15 Teile Harnstoff,
0.3 Teile eines Anthrachinon-Farbstoffs
0.5 Teile Formaldehyd (37 %),
14 Teile 30 %iges wässriges 1-Vinyl-2-pyrrolidon/3-Vinylpropionsäure-Copolymerisat und
53.2 Teile Wasser werden in einer Rührwerkskugelmühle mit Glasperlen gemahlen, bis die Aufhellerdispersion eine Korngrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 5

15 Teile der Aufhellermischung aus 60 % des schwerlöslichen Aufhellers der Formel

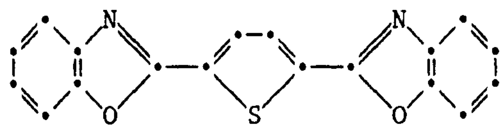

und 40 % des wasserlöslichen Aufhellers der Formel

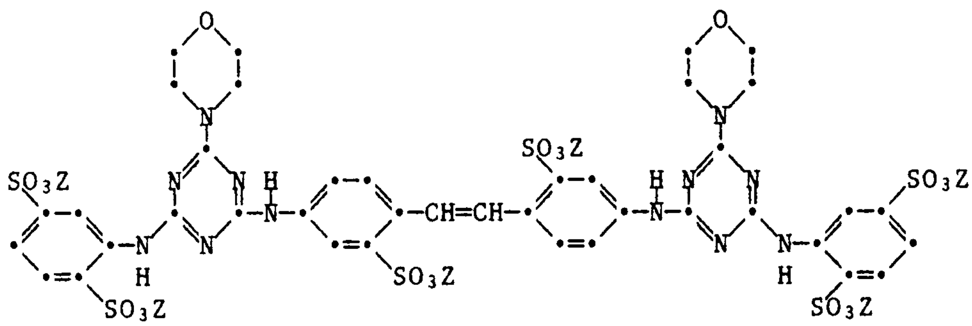

Z = Na, Diethanolamin (2:1)

2 Teile $C_{16}$-$C_{18}$-Fettalkohol mit 25 EO
15 Teile Polyethylenglykol 5-6000,
3.3 Teile Ethylenglykol,
0.5 Teile Formaldehyd (37 %),
14 Teile 30 %iges wässriges 1-Vinyl-2-pyrrolidon/3-Vinylpropionsäure-Copolymerisat und
50.2 Teile Wasser werden in einer Rührwerkskugelmühle mit Glasperlen gemahlen, bis die Aufhellerdispersion eine Korngrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 6

9.20 Teile des schwerlöslichen Aufhellers der Formel

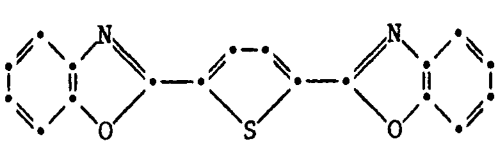

(Aktivgehalt 98 %)

6.64 Teile des wasserlöslichen Aufhellers der Formel

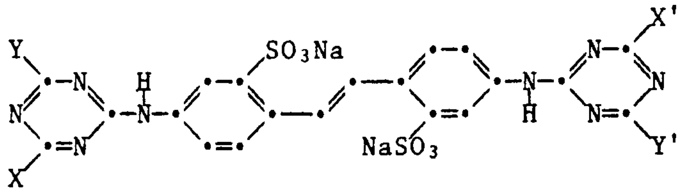

X,X' = -NH-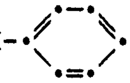

Y,Y' = $N(CH_2CH_2OH)_2$

(Aktivgehalt 90 %)

2.0 Teile $C_{16}$-$C_{18}$-Fettalkohol mit 25 Mol EO
0.3 Teile eines Anthrachinonfarbstoffes
15.0 Teile Polyethylenglykol 4000
0.5 Teile Formaldehyd (37 %)
14.0 Teile 30 %iges wässriges 1-Vinyl-2-pyrrolidon/3-Vinylpropionsäure-Copolymerisat und
52.36 Teile Wasser werden in einer Rührwerkskugelmühle mit Glasperlen gemahlen, bis die Aufhellerdispersion eine Partikelgrösse von weniger als 2 µm aufweist. Nach Abtrennen der Glassperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 7

7.9 Teile des schwerlöslichen Aufhellers der Formel

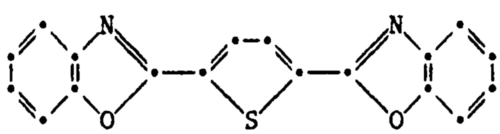

(Aktivgehalt 98 %)

11.4 Teile des wasserlöslichen Aufhellers der Formel

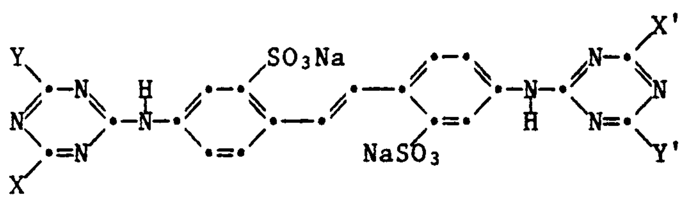

X,X' = -NH-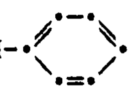

Y,Y' = $N(CH_2CH_2OH)_2$

(Aktivgehalt 90 %)

2.0 Teile $C_{16}$-$C_{18}$-Fettalkohol mit 25 Mol EO
20.0 Teile Polyethylenglykol 4000
0.2 Teile Chloracetamid
10.0 Teile 30 %iges wässriges 1-Vinyl-2-pyrrolidon/3-Vinylpropionsäure-Copolymerisat und
48.5 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 18 % Aufhellergehalt. Die Aufhellerdispersion ist sowohl bei Raumtemperatur als auch bei 40 Grad Celsius mehrere Monate lagerstabil.

Beispiel 8

9.20 Teile des schwerlöslichen Aufhellers der Formel

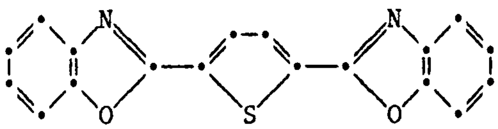

(Aktivgehalt 98 %)

6.64 Teile des wasserlöslichen Aufhellers der Formel

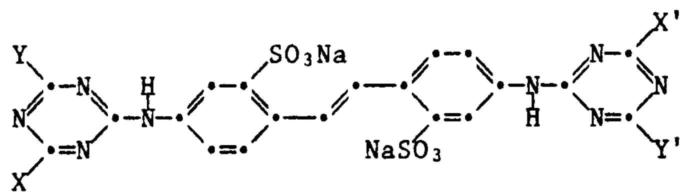

X,X' = -NH- 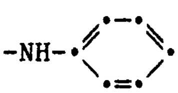

Y,Y' = $N(CH_2CH_2OH)_2$

(Aktivgehalt 90 %)

2.0 Teile $C_{16}$-$C_{18}$-Fettalkohol mit 25 Mol EO
15.0 Teile Polyethylenglykol 4000
0.2 Teile Chloracetamid
14.0 Teile 30 %iges wässriges 1-Vinyl-2-pyrrolidon/3-Vinylpropionsäure-Copolymerisat und
52.96 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 9

9.20 Teile des schwerlöslichen Aufhellers der Formel

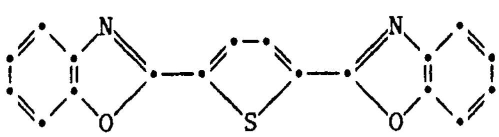

(Aktivgehalt 98 %)

6.64 Teile des wasserlöslichen Aufhellers der Formel

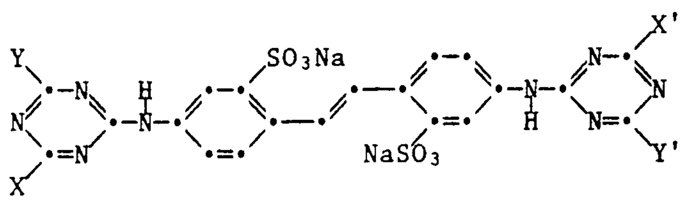

X,X' = -NH- 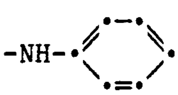

Y,Y' = $N(CH_2CH_2OH)_2$

(Aktivgehalt 90 %)

2.0 Teile eines EO-PO-Blockpolymeren mit 80 % EO und einem Molekulargewicht von ca. 16.000.
15.0 Teile Harnstoff
0.2 Teile Chloracetamid
14.0 Teile 30 %iges wässriges 1-Vinyl-2-pyrrolidon/3-Vinylpropionsäure-Copolymerisat und
52.96 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 10

9.20 Teile des schwerlöslichen Aufhellers der Formel

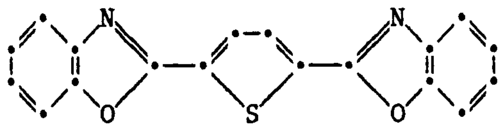

(Aktivgehalt 98 %)

6.64 Teile des wasserlöslichen Aufhellers der Formel

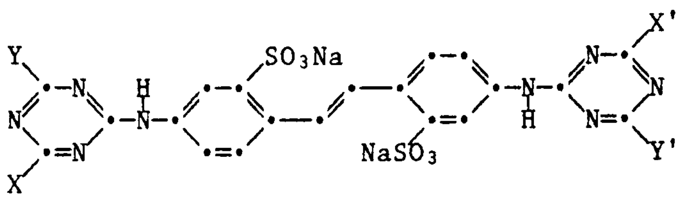

X,X' = 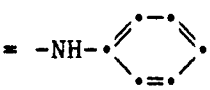

Y,Y' = $N(CH_2CH_2OH)_2$

(Aktivgehalt 90 %)

2.0 Teile eines EO-PO-Blockpolymeren mit 10 % EO und einem Molekulargewicht von ca. 1060.
15.0 Teile Harnstoff
0.2 Teile Chloracetamid
14.0 Teile 30 %iges wässriges 1-Vinyl-2-pyrrolidon/3-Vinylpropionsäure-Copolymerisat und
52.96 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 11

5.30 Teile des schwerlöslichen Aufhellers der Formel

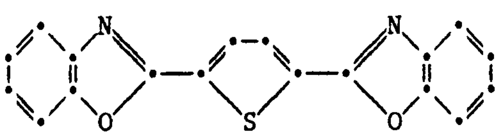

(Aktivgehalt 98 %)

13.24 Teile des wasserlöslichen Aufhellers der Formel

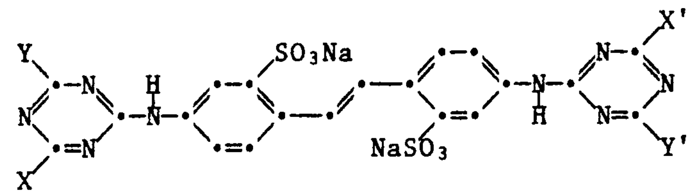

X,X' = 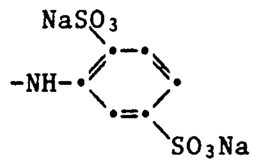

Y,Y' = 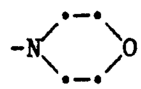

(Aktivgehalt 74 %)

2.0 Teile $C_{16}$-$C_{18}$-Fettalkohol mit 25 Mol EO
20.0 Teile Polyethylenglykol 4000
0.2 Teile Chloracetamid
14.0 Teile 30 %iges wässriges 1-Vinyl-2-pyrrolidon/3-Vinylpropionsäure-Copolymerisat und
54.74 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

<u>Beispiel 12</u>

8.16 Teile des schwerlöslichen Aufhellers der Formel

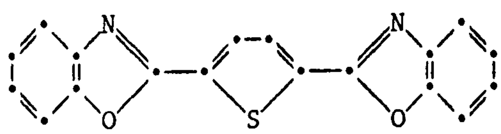

(Aktivgehalt 98 %)

8.97 Teile des wasserlöslichen Aufhellers der Formel

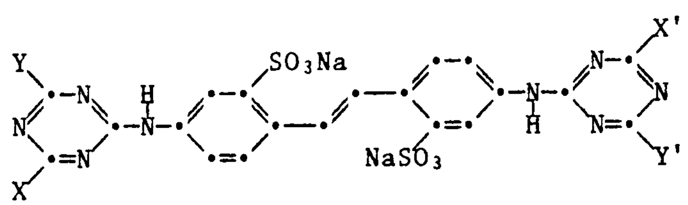

X,X' = 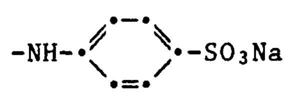

Y,Y' = $NH-CH_2CH_2OH$

(Aktivgehalt 78 %)

2.0 Teile $C_{16}$-$C_{18}$-Fettalkohol mit 25 Mol EO
20.0 Teile Polyethylenglykol 4000
0.2 Teile Chloracetamid
14.0 Teile 30 %iges wässriges 1-Vinyl-2-pyrrolidon/3-Vinylpropionsäure-Copolymerisat und
46.67 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 13

8.25 Teile des schwerlöslichen Aufhellers der Formel

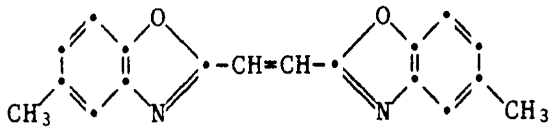

(Aktivgehalt 100 %)

1.45 Teile des schwerlöslichen Aufhellers der Formel

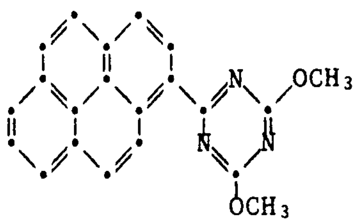

(Aktivgehalt 100 %)

5.90 Teile des wasserlöslichen Aufhellers der Formel

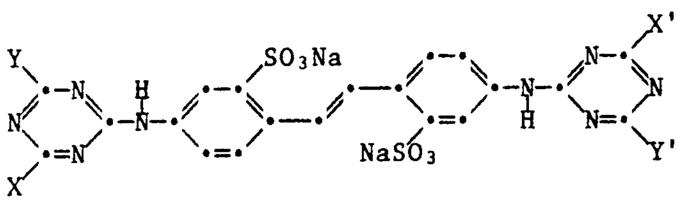

X,X' = -NH- 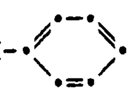

Y,Y' = $N(CH_2CH_2OH)_2$

(Aktivgehalt 90 %)

2.0 Teile $C_{16}$-$C_{18}$-Fettalkohol mit 25 Mol EO
2.5 Teile 1,2-Propylenglykol
0.5 Teile eines modifizierten Aldehyd-Keton-Kondensationsharzes
16.0 Teile Polyethylenglykol 4000
0.2 Teile Chloracetamid
14.0 Teile 30 %iges wässriges 1-Vinyl-2-pyrrolidon/3-Vinylpropionsäure-Copolymerisat und
49.26 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 14

8.08 Teile des schwerlöslichen Aufhellers der Formel

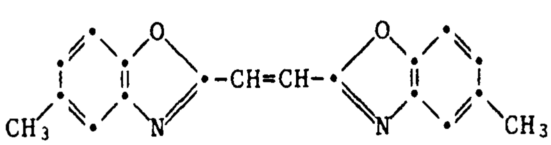

(Aktivgehalt 100 %)

1.42 Teile des schwerlöslichen Aufhellers der Formel

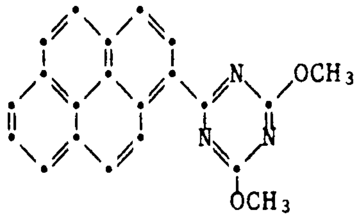

(Aktivgehalt 100 %)

7.05 Teile des wasserlöslichen Aufhellers der Formel

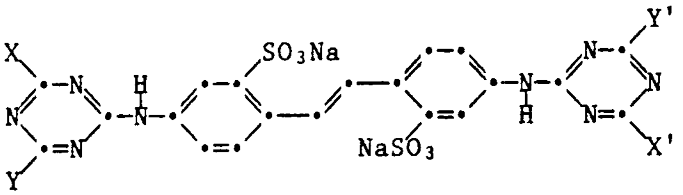

X,X' = 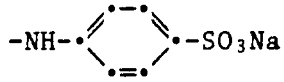

Y,Y' = $NH-CH_2CH_2OH$

(Aktivgehalt 78 %)

2.0 Teile $C_{16}$-$C_{18}$-Fettalkohol mit 25 Mol EO
2.5 Teile 1,2-Propylenglykol
0.5 Teile eines modifizierten Aldehyd-Keton-Kondensationsharzes
8.0 Teile Polyethylenglykol 4000
0.2 Teile Chloracetamid
14.0 Teile 30 %iges wässriges 1-Vinyl-2-pyrrolidon/3-Vinylpropionsäure-Copolymerisat und
56,25 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 15

5.7 Teile des schwerlöslichen Aufhellers der Formel

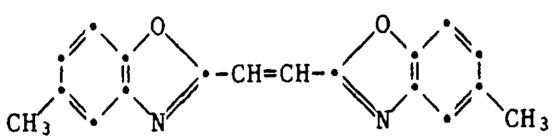

(Aktivgehalt 100 %)

1.0 Teile des schwerlöslichen Aufhellers der Formel

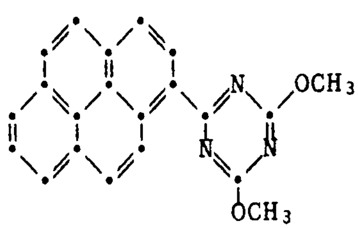

(Aktivgehalt 100 %)

11.2 Teile des wasserlöslichen Aufhellers der Formel

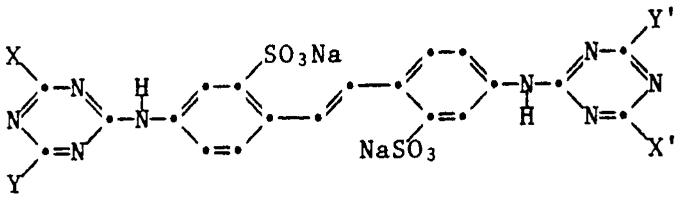

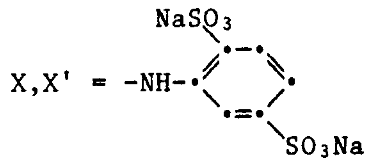

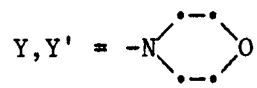

(Aktivgehalt 74 %)

2.0 Teile $C_{16}$-$C_{18}$-Fettalkohol mit 25 Mol EO
1.75 Teile 1,2-Propylenglykol
0.35 Teile eines modifizierten Aldehyd-Keton-Kondensationsharzes
15.0 Teile Polyethylenglykol
0.2 Teile Chloracetamid
14.0 Teile 30 %iges wässriges 1-Vinyl-2-pyrrolidon/3-Vinylpropionsäure-Copolymerisat und
48.8 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 16

8.08 Teile des schwerlöslichen Aufhellers der Formel

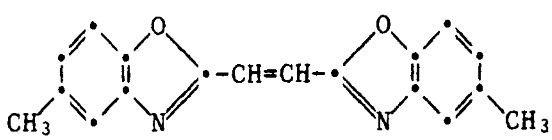

(Aktivgehalt 100 %)

1.42 Teile des schwerlöslichen Aufhellers der Formel

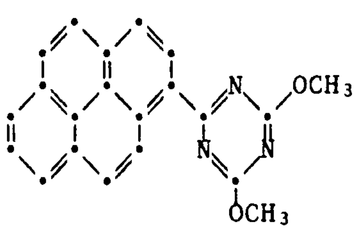

(Aktivgehalt 100 %)

6.25 Teile des wasserlöslichen Aufhellers der Formel

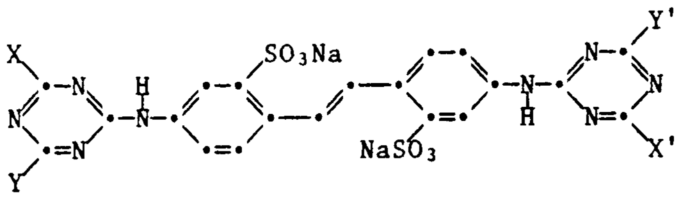

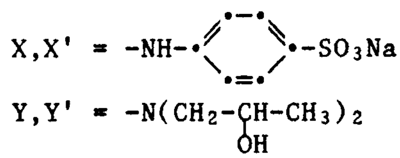

(Aktivgehalt 88 %)

2.0 Teile $C_{16}$-$C_{18}$-Fettalkohol mit 25 Mol EO
2.5 Teile 1,2-Propylenglykol
0.5 Teile eines modifizierten Aldehyd-Keton-Kondensationsharzes
0.2 Teile Chloracetamid
14.0 Teile 30 %iges wässriges 1-Vinyl-2-pyrrolidon/3-Vinylpropionsäure-Copolymerisat und
65.05 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 17

4.64 Teile des schwerlöslichen Aufhellers der Formel

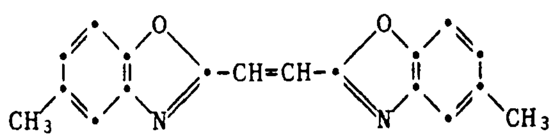

(Aktivgehalt 100 %)

0.82 Teile des schwerlöslichen Aufhellers der Formel

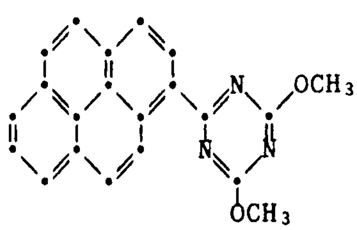

(Aktivgehalt 100 %)

6.25 Teile des wasserlöslichen Aufhellers der Formel

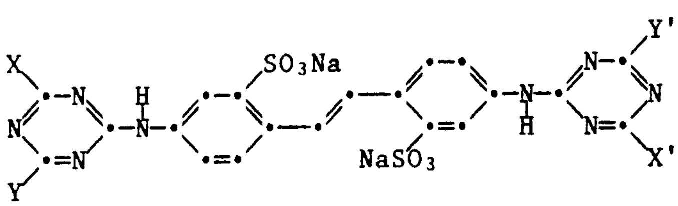

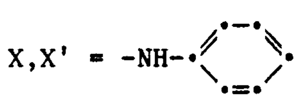

Y,Y' = $OCH_3$

(Aktivgehalt 88.5 %)

2.0 Teile $C_{16}$-$C_{18}$-Fettalkohol mit 25 Mol EO
1.4 Teile 1,2-Propylenglykol
0.3 Teile eines modifizierten Aldehyd-Keton-Kondensationsharzes
50.0 Teile Triethanolamin
0.2 Teile Chloracetamid
14.0 Teile 30 %iges wässriges 1-Vinyl-2-pyrrolidon/3-Vinylpropionsäure-Copolymerisat und
20.4 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 15 % Aufhellergehalt. Die Aufhellerdispersion ist sowohl bei Raumtemperatur als auch bei 40 Grad Celsius mehrere Monate lagerstabil.

Beispiel 18

9.2 Teile des schwerlöslichen Aufhellers der Formel

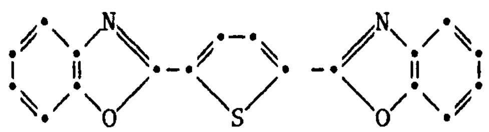

(Aktivgehalt 98 %)

9.0 Teile des schwerlöslichen Aufhellers der Formel

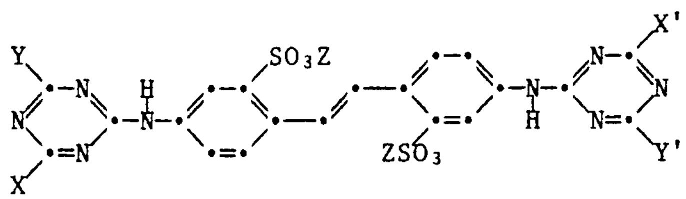

X,X' = 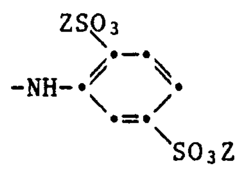

Y,Y' = 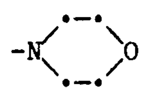

(Aktivgehalt 74 %)

Z = 2:1 Na, Diethanolammonium

2.0 Teile $C_{16}$-$C_{18}$-Fettalkohol mit 25 Mol EO
0.7 Teile Diethanolamin
3.3 Teile Ethylenglykol
15.0 Teile Polyethylenglykol 5000-6000
0.2 Teile Chloracetamid
14.0 Teile 30 %iges wässriges 1-Vinyl-2-pyrrolidon/3-Vinylpropionsäure-Copolymerisat und
46.6 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 15,6 % Aufhellergehalt. Die Aufhellerdispersion ist sowohl bei Raumtemperatur als auch bei 40 Grad Celsius mehrere Monate lagerstabil.

Beispiel 19

4.24 Teile des schwerlöslichen Aufhellers der Formel

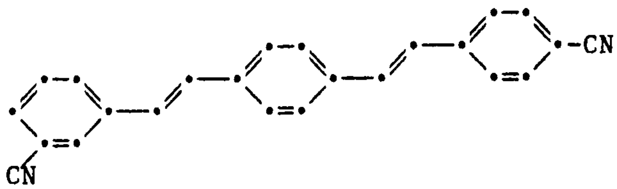

(Aktivgehalt 100 %)

1.06 Teile des schwerlöslichen Aufhellers der Formel

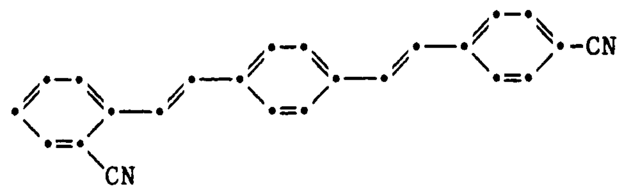

(Aktivgehalt 100 %)

5.2 Teile des schwerlöslichen Aufhellers der Formel

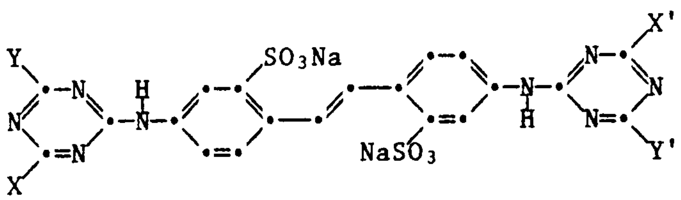

X,X' = -NH- 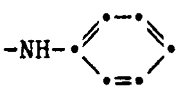

Y'Y' = $-N(CH_2CH_2OH)_2$

(Aktivgehalt 90 %)

2.0 Teile $C_{16}$-$C_{18}$-Fettalkohol mit 25 Mol EO
12.0 Teile Polyethylenglykol 4000
0.2 Teile Chloracetamid
14.0 Teile 30 %iges wässriges 1-Vinyl-2-pyrrolidon/3-Vinylpropionsäure-Copolymerisat und
61.3 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 10 % Aufhellergehalt. Die Aufhellerdispersion ist sowohl bei Raumtemperatur als auch bei 40 Grad Celsius mehrere Monate lagerstabil.

Beispiel 20

2.68 Teile des schwerlöslichen Aufhellers der Formel

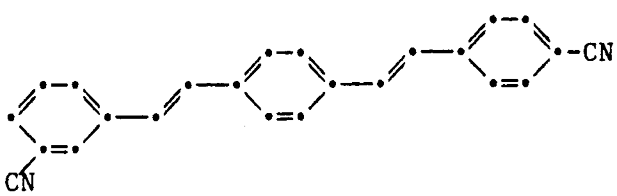

(Aktivgehalt 100 %)

0.67 Teile des schwerlöslichen Aufhellers der Formel

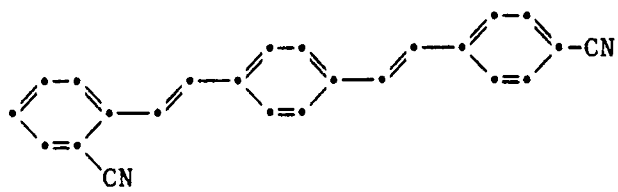

(Aktivgehalt 100 %)

9.0 Teile des schwerlöslichen Aufhellers der Formel

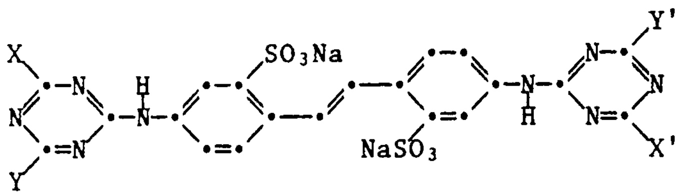

X,X' = 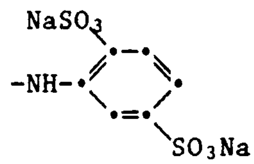

Y,Y' = 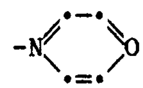

(Aktivgehalt 74 %)

2.0 Teile $C_{16}$-$C_{18}$-Fettalkohol mit 25 Mol EO
12.0 Teile Polyethylenglykol 4000
0.2 Teile Chloracetamid
14.0 Teile 30 %iges wässriges 1-Vinyl-2-pyrrolidon/3-Vinylpropionsäure-Copolymerisat und
59.45 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 10 % Aufhellergehalt. Die Aufhellerdispersion ist sowohl bei Raumtemperatur als auch bei 40 Grad Celsius mehrere Monate lagerstabil.

Beispiel 21

4.24 Teile des schwerlöslichen Aufhellers der Formel

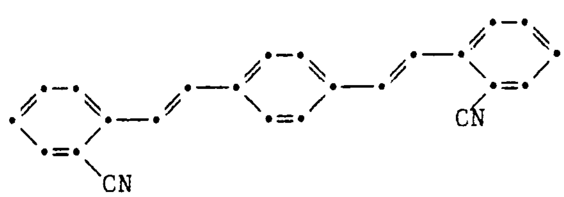

(Aktivgehalt 100 %)

1.06 Teile des schwerlöslichen Aufhellers der Formel

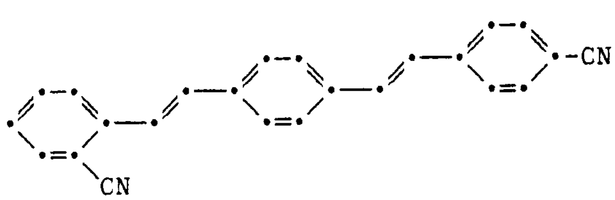

(Aktivgehalt 100 %)

5.2 Teile des schwerlöslichen Aufhellers der Formel

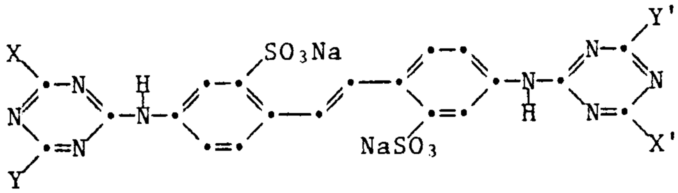

X,X' = -NH- 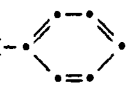

Y,Y' = $N(CH_2CH_2OH)_2$

(Aktivgehalt 90 %)

2.0 Teile $C_{16}$-$C_{18}$-Fettalkohol mit 25 Mol EO
12.0 Teile Polyethylenglykol 4000
0.2 Teile Chloracetamid
14.0 Teile 30 %iges wässriges 1-Vinyl-2-pyrrolidon/3-Vinylpropionsäure-Copolymerisat und
61.3 Teile Wasser werden in einer Rührwerkskugelmühle mit Glasperlen gemahlen, bis die Aufhellerdispersion eine Partikelgrösse von weniger als 2 µm aufweist. Nach Abtrennen der Glasperlen erhält man eine homogene, gut giess- und pumpbare flüssige Handelsform mit 10 % Aufhellergehalt. Die Aufhellerdispersion ist sowohl bei Raumtemperatur als auch bei 40 Grad Celsius mehrere Monate lagerstabil.

Beispiel 22

1 g der Aufheller-Dispersion gemäss einem der Beispiele 1 bis 21 werden in 10 ml 40 °C warmem Wasser, das 1 g/l eines nichtionogenen Dispergators (Irgasol NA) enthält, vordispergiert. Diese Vordispersion wird dem 40 °C warmen Aufhellerbad zugegeben, das 100 g vorgebleichtes Polyester/Cellulose-Gewebe (50:50) und 1 g/l eines nichtionogenen Dispergators (Irgasol NA) enthält. Anschliessend erfolgt nach einer 10 minütigen Vorlaufzeit innerhalb von 30 Minuten das Aufheizen des Aufhellerbades auf 110 °C. Das Gewebe wird bei dieser Temperatur weitere 40 Minuten im Aufhellerbad gelassen. Danach wird abgekühlt, gespült und getrocknet. Man erhält ein gleichmässig aufgehelltes Gewebe mit hohem Weissgrad.

Beispiel 23

Die Aufhellerdispersion gemäss einem der Beispiele 1 bis 4 und 6 bis 21 wird wie in Beispiel 5 vordispergiert. Diese Vordispersion wird dem 40 °C warmen Aufhellerbad zugegeben, das 100 g Polyester/Cellulose-Gewebe (50:50) 1 g/l eines nichtionogenen Dispergators (Irgasol NA) sowie die zum Bleichen des Gewebes erforderlichen Chemikalien (5 ml/l $H_2O_2$ 35 Gew.%, 0,5 ml/l Diethylentriaminopentaessigsäure und 1 g/l NaOH 100 %) enthält. Die Applikation erfolgt wie in Beispiel 22. Man erhält ein gleichmässig aufgehelltes und gebleichtes Gewebe mit hohem Weissgrad.

**Patentansprüche**

1. Wässrige Aufhellerdispersionen enthaltend
3 bis 20 % mindestens eines wasserunlöslichen oder schwerlöslichen optischen Aufhellers,
4 bis 20 % mindestens eines wasserlöslichen optischen Aufhellers,
5 bis 25 % Lösungsvermittler,
2 bis 20 % mindestens eines anionsichen, kationischen und/oder nichtionogenen Dispergiemittels,
0,1 bis 10 % weitere Hilfsmittel
und zusätzlich 1 bis 20 % eines Copolymerisats von 1-Vinyl-2-pyrrolidon mit 3-Vinylpropionsäure.

2. Aufhellerdispersion gemäss Anspruch 1, dadurch gekennzeichnet, dass sie 5-10 % wasserunlösliche oder schwerlösliche Aufheller, 4-10 % wasserlösliche Aufheller, 2-5 % Dispergiermittel, 10-25 % Lösungsvermittler, 3-6 % Copolymerisat von 1-Vinyl-2-pyrrolidon mit 3-Vinylpropionsäure und 0,1-5 % weitere Hilfsmittel enthält.

3. Aufhellerdispersion gemäss Anspruch 1, dadurch gekennzeichnet, dass sie als wasserunlösliche oder schwerlösliche Aufheller Verbindungen oder Mischungen von Verbindungen aus der Klasse der

Stilbene, Distyrylbenzole, Distyryl-biphenyle, Triazinyle, Benzoxazole, Bis-benzoxazole, Bis-benzoxazolyl-thiophene, Bis-benzoxazolylnaphthaline, Pyrene, Cumarin und Naphthalin-peri-dicarbonsäureimide und als wasserlösliche Aufheller Verbindungen oder Mischungen von Verbindungen aus der Klasse der Bis-triazinyl-diaminostilbene, Distyryl-biphenyle und Triazolyl-stilbene enthält.

**4.** Aufhellerdispersion gemäss Anspruch 3, dadurch gekennzeichnet, dass sie als wasserunlöslichen oder schwerlöslichen Aufheller mindestens eine Verbindung der Formel

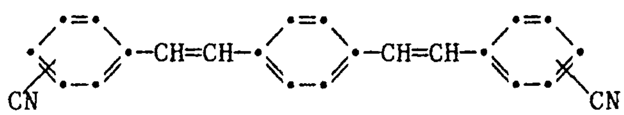

(1)

enthält.

**5.** Aufhellerdispersion gemäss Anspruch 3, dadurch gekennzeichnet, dass sie als wasserunlöslichen oder schwerlöslichen Aufheller mindestens eine Verbindung der Formel

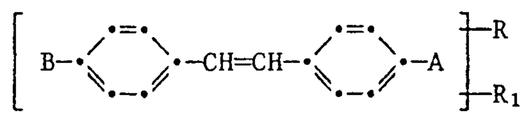

(2)

enthält, worin

| | |
|---|---|
| A = | 2-Benzoxazolyl, -CH = CH-CN, -CH = CH-COOR$_2$, -COOR$_2$ oder Halogen, |
| B = | Phenyl falls A 2-Benzoxazolyl, |
| B = | -CH = CH-CN falls A -CH = CH-CN, |
| B = | -CH = CH-COOR$_2$ falls A -CH = CH-COOR$_2$, |
| B = | 2-Benzoxazolyl falls A -COOR$_2$, |
| B = | Naphthalin-triazolyl falls A Halogen oder -COOR$_2$, |
| B = | 1,2,4-Oxadiazol falls A 2-Benzoxazolyl |
| | und |
| R = | H, $C_1$-$C_4$-Alkyl |
| R$_1$ = | H, $C_1$-$C_4$-Alkyl und CN |
| R$_2$ = | $C_1$-$C_4$-Alkyl |

bedeutet.

**6.** Aufhellerdispersion gemäss Anspruch 3, dadurch gekennzeichnet, dass sie als wasserunlöslichen oder schwerlöslichen Aufheller eine Verbindung der Formel

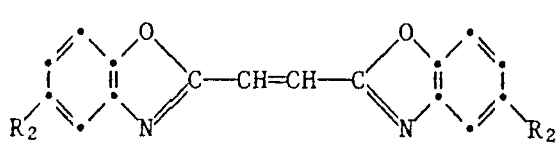

(3)

enthält worin R$_2$ $C_1$-$C_4$-Alkyl bedeutet.

**7.** Aufhellerdispersion gemäss Anspruch 3, dadurch gekennzeichnet, dass sie als wasserunlöslichen oder schwerlöslichen Aufheller eine Verbindung der Formel

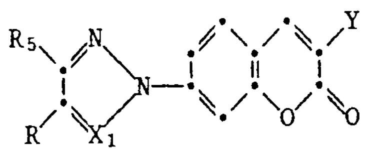

(4)

enthält, worin $R_5$ $C_1$-$C_4$-Alkyl oder Phenyl, R = H oder $C_1$-$C_4$-Alkyl, $X_1$ C, N und Y Phenyl oder ein Rest der Formel

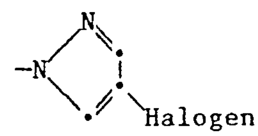

bedeutet.

8. Aufhellerdispersion gemäss Anspruch 3, dadurch gekennzeichnet, dass sie als wasserunlöslichen oder schwerlöslichen Aufheller eine Verbindung der Formel

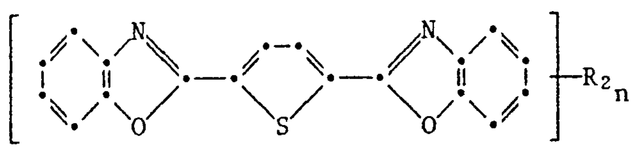

(5)

enthält, worin n die Zahlen Null bis 2 und $R_2$ $C_1$-$C_4$-Alkyl bedeutet.

9. Aufhellerdispersion gemäss Anspruch 3, dadurch gekennzeichnet, dass sie als wasserunlöslichen oder schwerlöslichen Aufheller eine Verbindung der Formel

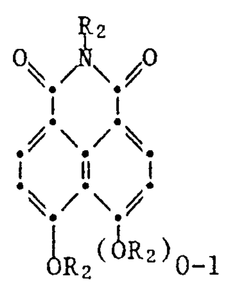

(6)

enthält, worin $R_2$ $C_1$-$C_4$-Alkyl bedeutet.

10. Aufhellerdispersion gemäss Anspruch 3, dadurch gekennzeichnet, dass sie als wasserunlöslichen oder schwerlöslichen Aufheller eine Verbindung der Formel

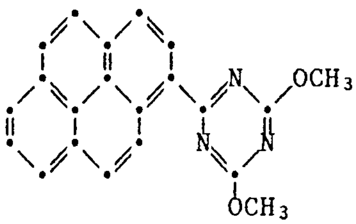

(7)

enthält.

**11.** Aufhellerdispersion gemäss Anspruch 3, dadurch gekennzeichnet, dass sie als wasserunlöslichen oder schwerlöslichen Aufheller eine Verbindung der Formel

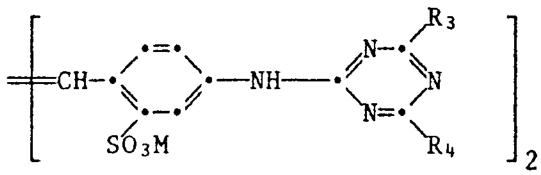

(18)

mit $R_3$=$R_4$= -NH- 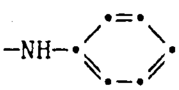 oder

$R_3$= -NH- 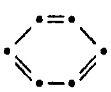 und $R_4$= 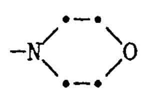

und

M = Na, Li, K oder Ammonium enthält.

**12.** Aufhellerdispersion gemäss Anspruch 3, dadurch gekennzeichnet, dass sie als wasserunlöslichen oder schwerlöslichen Aufheller eine Verbindung der Formel

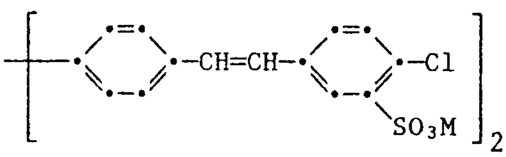

(17)

mit

M = Li, Na oder K enthält.

**13.** Aufhellerdispersion gemäss Anspruch 3, dadurch gekennzeichnet, dass sie als wasserlöslichen Aufheller eine Verbindung der Formel

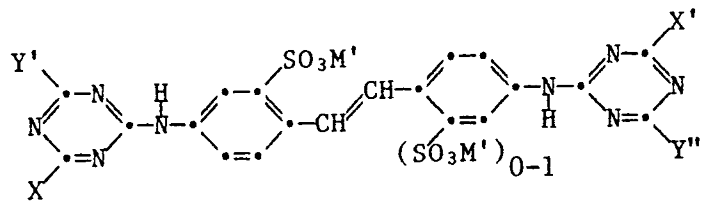

(19)

mit

X, X' = Anilin, Anilin-3-sulfosäure, Anilin-4-sulfosäure, Anilin-2,5-disulfosäure oder deren Salze oder Methanol

Y', Y" = Anilin, Ethanolamin, Diethanolamin, N-Methyl-ethanolamin, Diisopropanolamin, Ethylamin, Diethylamin, Morpholin, Diethylenglykol, Propylenglykol, Aminoethansulfosäure oder deren Salze, Ethanol-aminopropion-säureamid, Cyanoethylbenzylamin, Cyanoethylethanolamin

M' = H, Li, Na, K, Ammonium oder $C_1$-$C_4$-Alkylammonium

enthält.

**14.** Aufhellerdispersion gemäss Anspruch 3, dadurch gekennzeichnet, dass sie als wasserlöslichen Aufheller eine Verbindung der Formel

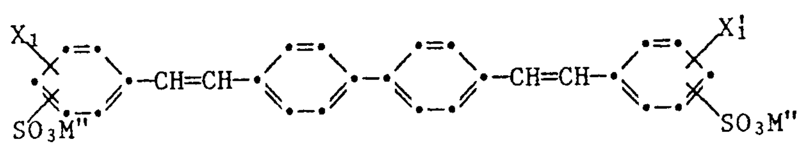

(20)

mit

$X_1$, $X_1'$ = H oder Chlor und

M" = H, Ammonium oder $C_1$-$C_4$-Alkylammonium und gegebenenfalls Li, Na, K enthält.

**15.** Aufhellerdispersion gemäss Anspruch 3, dadurch gekennzeichnet, dass sie als wasserlöslichen Aufheller eine Verbindung der Formel

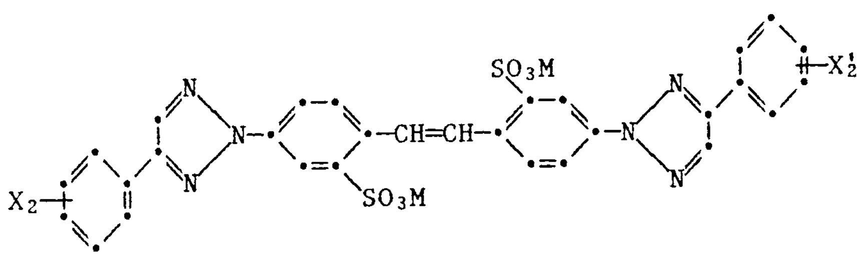

(21)

mit $X_2$, $X_2'$ = H, $SO_3M$ und M = Li, Na, K, Anmonium oder $C_1$-$C_4$-Alkylammonium enthält.

**16.** Aufhellerdispersion gemäss Anspruch 3, dadurch gekennzeichnet, dass sie eine Mischung von wasserlöslichen Verbindungen der Formel

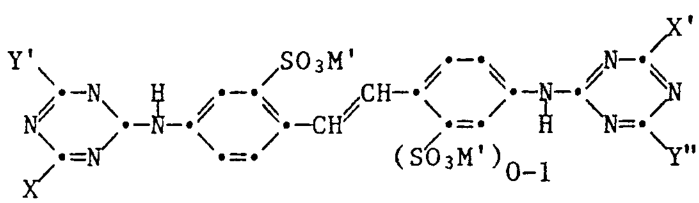

(19)

mit

X, X' = Anilin, Anilin-3-sulfosäure, Anilin-4-sulfosäure, Anilin-2,5-disulfosäure oder deren Salze oder Methanol

Y', Y" = Anilin, Ethanolamin, Diethanolamin, N-Methyl-ethanolamin, Diisopropanolamin, Ethylamin, Diethylamin, Morpholin, Diethylenglykol, Propylenglykol, Aminoethansulfosäure oder deren Salze, Ethanol-aminopropion-säureamid, Cyanoethylbenzylamin, Cyanoethylethanolamin und

M' = H, Li, Na, K, Ammonium oder $C_1$-$C_4$-Alkylammonium

mit wasserunlöslichen Verbindungen der Formel

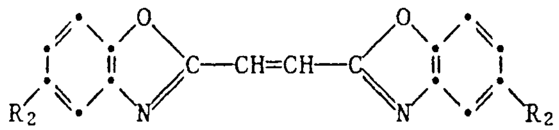

(3)

und/oder Verbindungen der Formel

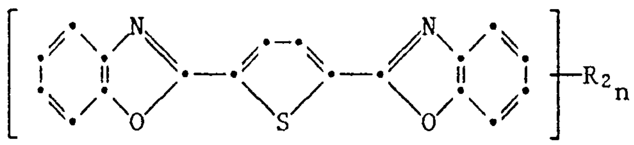

(5)

worin

$R_2$ = $C_1$-$C_4$-Alkyl und n die Zahlen Null bis 2 bedeuten,

enthält.

**17.** Aufhellerdispersion gemäss Anspruch 3, dadurch gekennzeichnet, dass sie eine Mischung von wasserlöslichen Verbindungen der Formel

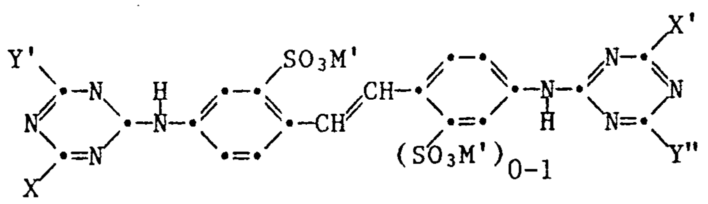

(19)

mit

X, X' = Anilin, Anilin-3-sulfosäure, Anilin-4-sulfosäure, Anilin-2,5-disulfosäure oder deren Salze oder Methanol

Y', Y" = Anilin, Ethanolamin, Diethanolamin, N-Methyl-ethanolamin, Diisopropanolamin, Ethylamin, Diethylamin, Morpholin, Diethylenglykol, Propylenglykol, Aninoethansulfosäure oder deren Salze, Ethanol-aminopropion-säureamid, Cyanoethylbenzylamin, Cyanoethylethanolamin und

M' = H, Li, Na, K, Ammonium oder $C_1$-$C_4$-Alkylammonium

mit wasserunlöslichen Verbindungen der Formeln

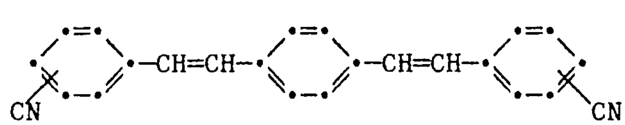

und/oder einer Verbindung der Formel

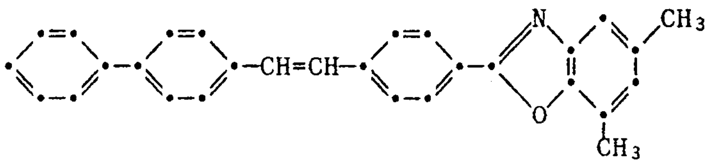

enthält.

**18.** Aufhellerdispersion gemäss Anspruch 3, dadurch gekennzeichnet, dass sie eine Mischung von wasserlöslichen Verbindungen der Formel

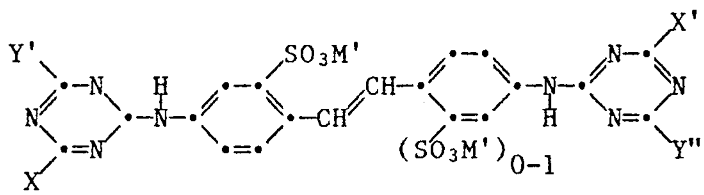

(19)

mit

X, X' = Anilin, Anilin-3-sulfosäure, Anilin-4-sulfosäure, Anilin-2,5-disulfosäure oder deren Salze oder Methanol

Y', Y" = Anilin, Ethanolamin, Diethanolamin, N-Methyl-ethanolamin, Diisopropanolamin, Ethylamin, Diethylamin, Morpholin, Diethylenglykol, Propylenglykol, Aminoethansulfosäure oder deren Salze, Ethanol-aminopropion-säureamid, Cyanoethylbenzylamin, Cyanoethylethanolamin

M' = H, Li, Na, K, Ammonium oder $C_1$-$C_4$-Alkylammonium

mit einer wasserunlöslichen Verbindung der Formel

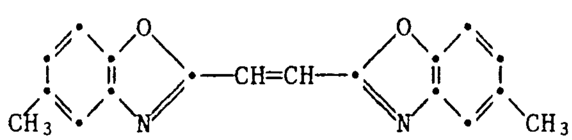

und einer Verbindung der Formel

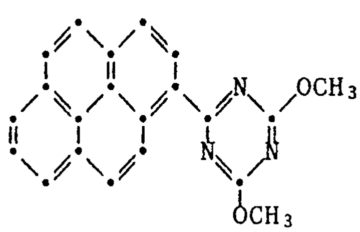

enthält.

**19.** Aufhellerdispersion gemäss Anspruch 3, dadurch gekennzeichnet, dass sie eine wasserunlösliche Verbindung der Formel

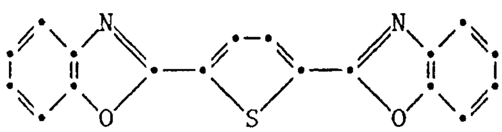

und eine wasserlösliche Verbindung der Formel

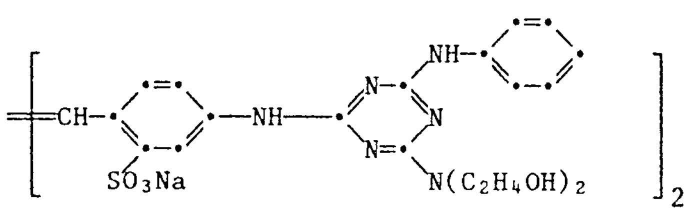

enthält.

**20.** Aufhellerdispersion gemäss Anspruch 1, dadurch gekennzeichnet, dass sie 5-10 % wasserunlöslichen bis schwerlöslichen optischen Aufheller aus der Klasse der Bisbenzoxazolyl-thiophen-aufheller, 4-10 % wasserlöslichen optischen Aufheller aus der Klasse der Bistriazinyldiamino-stilben-disulfonsäure-aufheller, 2-5 % ethoxylierten $C_{16}$-$C_{18}$ Fettalkohol oder Ethylenoxid-Propylenoxid Blockpolymere als Dispergiermittel, 3-6 % Copolymerisat von 1-Vinyl-2-pyrrolidon mit 3 Vinylpropionsäure, 14-16 % Polyethylenglykol oder 10-25 % Harnstoff als Lösungsvermittler 0-0,5 % Nuancierfarbstoff und 0,1-0,5 % Formaldehyd als weitere Hilfsmittel enthält.

**21.** Verfahren zur Herstellung einer wässrigen Aufhellerdispersion gemäss Anspruch 1, dadurch gekennzeichnet, dass mindestens ein wasserunlöslicher oder schwerlöslicher und mindestens ein wasserlöslicher optischer Aufheller mit mindestens einem anionischen, kationischen oder nichtionogenen Dispergiermittel, Lösungsvermittler, einem Copolymer von 1-Vinyl-2-pyrrolidon mit 3-Vinylpropionsäure sowie weiteren Hilfsmitteln und Wasser a) durch Mischen der separat hergestellten und formierten Einzelkomponenten oder b) durch gemeinsame Formierung der Einzelkomponenten homogenisiert wird.

**22.** Verwendung der Aufhellerdispersion gemäss Anspruch 1 zum optischen Aufhellen von Polyester/Cellulosefasermaterial.

**23.** Verwendung gemäss Anspruch 22 im 1-stufigen Ausziehverfahren.

## Claims

**1.** An aqueous whitener dispersion comprising 3 to 20% of at least one water-insoluble or sparingly soluble fluorescent whitening agent, 4 to 20% of at least one water-soluble fluorescent whitening agent, 5 to 25% of solubiliser, 2 to 20% of at least one anionic, cationic and/or non-ionic dispersant, 0.1 to 10% of further assistants, and additionally 1 to 20% of a copolymer of 1-vinyl-2-pyrrolidone and 3-vinylpropionic acid.

**2.** A whitener dispersion according to claim 1, which comprises 5-10% of water-insoluble or sparingly soluble fluorescent whitening agent, 4-10% of water-soluble fluorescent whitening agent, 2-5% of dispersant, 10-25% of solubiliser, 3-6% of copolymer of 1-vinyl-2-pyrrolidone and 3-vinylpropionic acid, and 0.1-5% of further assistants.

**3.** A whitener dispersion according to claim 1, wherein the water-insoluble or sparingly soluble fluorescent whitening agents are compounds or mixtures of compounds selected from the class consisting of the stilbenes, distyrylbenzenes, distyrylbiphenyls, triazinyls, benzoxazoles, bis(benzoxazoles), bis-(benzoxazolyl)thiophenes, bis(benzoxazolyl)naphthalenes, pyrenes, coumarin and naphthalene-peridicarboximides, and the water-soluble fluorescent whitening agents are compounds or mixtures of compounds selected from the class consisting of bis(triazinyl)diaminostilbenes, distyrylbiphenyls and

triazolylstilbenes.

**4.** A whitener dispersion according to claim 3, wherein the water-insoluble or sparingly soluble fluorescent whitening agent is at least one compound of the formula

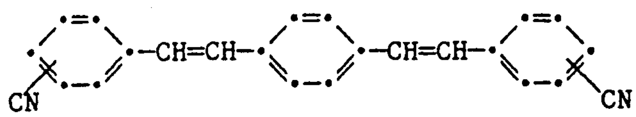

(1)

**5.** A whitener dispersion according to claim 3, wherein the water-insoluble or sparingly soluble fluorescent whitening agent is at least one compound of the formula

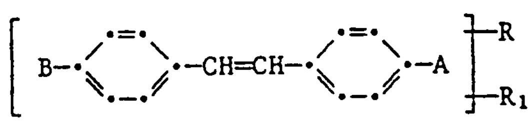

(2)

| | |
|---|---|
| A = | 2-benzoxazolyl, -CH = CH-CN, -CH = CH-$COOR_2$, -$COOR_2$ or halogen, |
| B = | phenyl if A is 2-benzoxazolyl, |
| B = | -CH = CH-CN if A is -CH = CH-CN, |
| B = | -CH = CH-$COOR_2$ if A is -CH = CH-$COOR_2$, |
| B = | 2-benzoxazolyl if A is -$COOR_2$, |
| B = | naphthalenetriazolyl if A is halogen or -$COOR_2$, |
| B = | 1,2,4-oxadiazole if A is 2-benzoxazolyl, |
| | and |
| R = | H, $C_1$-$C_4$alkyl, |
| $R_1$ = | H, $C_1$-$C_4$alkyl and CN, |
| $R_2$ = | $C_1$-$C_4$alkyl |

**6.** A whitener dispersion according to claim 3, wherein the water-insoluble or sparingly soluble fluorescent whitening agent is a compound of the formula

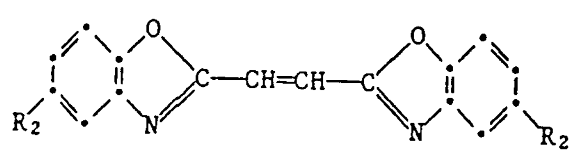

(3)

in which $R_2$ is $C_1$-$C_4$alkyl.

**7.** A whitener dispersion according to claim 3, wherein the water-insoluble or sparingly soluble fluorescent whitening agent is a compound of the formula

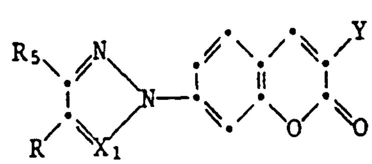

(4)

in which $R_5$ is $C_1$-$C_4$alkyl or phenyl, and R is H or $C_1$-$C_4$alkyl, $X_1$ is C or N, and Y is phenyl or a radical of the formula

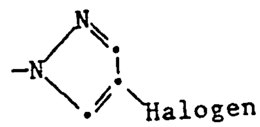

8. A whitener dispersion according to claim 3, wherein the water-insoluble or sparingly soluble fluorescent whitening agent is a compound of the formula

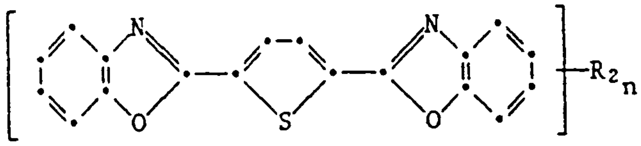

(5)

in which n is the number zero to 2 and $R_2$ is $C_1$-$C_4$alkyl.

9. A whitener dispersion according to claim 3, wherein the water-insoluble or sparingly soluble fluorescent whitening agent is a compound of the formula

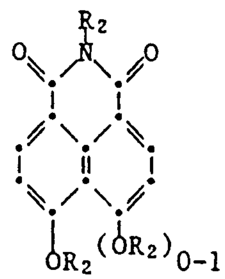

(6)

in which $R_2$ is $C_1$-$C_4$alkyl.

10. A whitener dispersion according to claim 3, wherein the water-insoluble or sparingly soluble fluorescent whitening agent is a compound of the formula

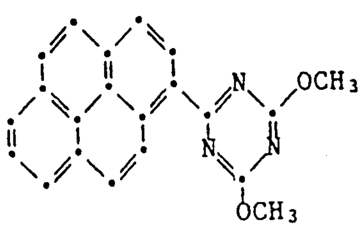

(7)

11. A whitener dispersion according to claim 3, wherein the water-insoluble or sparingly soluble fluorescent whitening agent is a compound of the formula

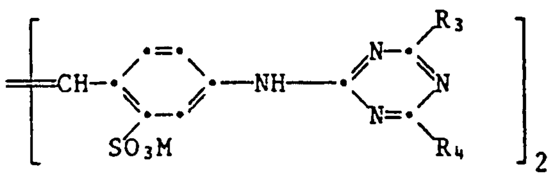

(18)

where $R_3=R_4$ = 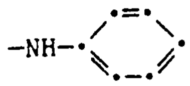 or

$R_3$= 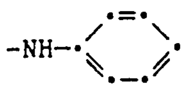 and $R_4$= 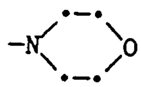

and M is Na, Li, K or ammonium.

**12.** A whitener dispersion according to claim 3, wherein the water-insoluble or sparingly soluble fluorescent whitening agent is a compound of the formula

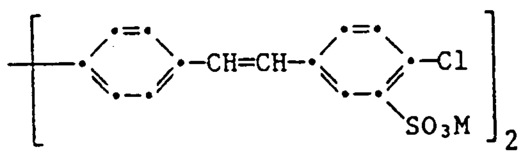

(17)

in which M is Li, Na or K.

**13.** A whitener dispersion according to claim 3, wherein the water-soluble fluorescent whitening agent is a compound of the formula

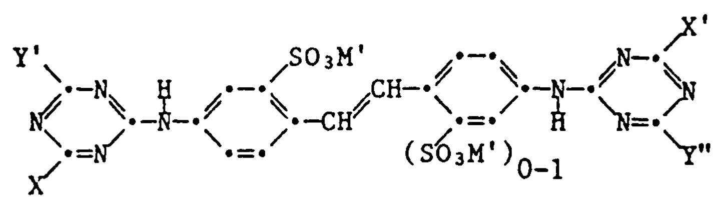

(19)

where
X and X' are aniline, aniline-3-sulfonic acid, aniline-4-sulfonic acid, aniline-2,5-disulfonic acid or salts thereof or methanol, Y' and Y" are aniline, ethanolamine, diethanolamine, N-methylethanolamine, diisopropanolamine, ethylamine, diethylamine, morpholine, diethylene glycol, propylene glycol, aminoethanesulfonic acid or salts thereof, ethanolaminopropionamide, cyanoethylbenzylamine or cyanoethylethanolamine, and M' is H, Li, Na, K, ammonium or $C_1$-$C_4$ alkylammonium.

**14.** A whitener dispersion according to claim 3, wherein the water-soluble fluorescent whitening agent is a compound of the formula

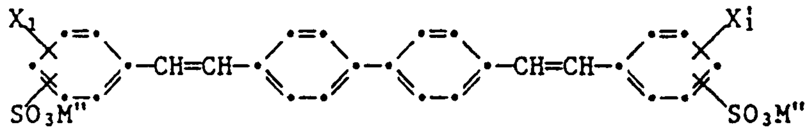

(20)

where $X_1$ and $X_1'$ are H or chlorine and M" is H, ammonium or $C_1$-$C_4$alkylammonium and, where appropriate, Li, Na or K.

**15.** A whitener dispersion according to claim 3, wherein the water-soluble fluorescent whitening agent is a compound of the formula

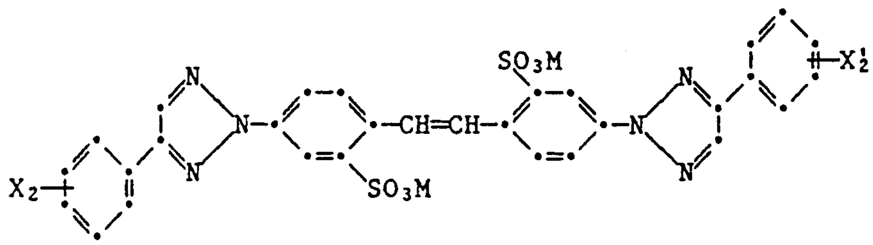

(21)

where $X_2$ and $X_1'$ are H, $SO_2M$ and M is Li, Na, K, ammonium or $C_1$-$C_4$alkylammonium.

**16.** A whitener dispersion according to claim 3, which comprises a mixture of a water-soluble compound of the formula

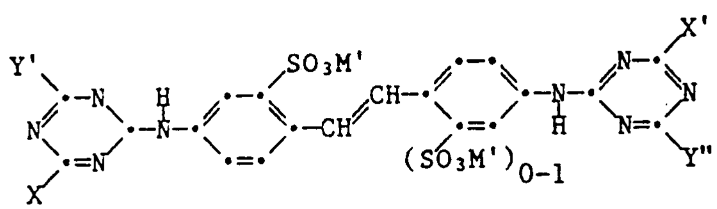

(19)

where
X and X' are aniline, aniline-3-sulfonic acid, aniline-4-sulfonic acid, aniline-2,5-disulfonic acid or salts thereof or methanol, Y' and Y" are aniline, ethanolamine, diethanolamine, N-methylethanolamine, diisopropanolamine, ethylamine, diethylamine, morpholine, diethylene glycol, propylene glycol, aminoethanesulfonic acid or salts thereof, ethanolaminopropionamide, cyanoethylbenzylamine or cyanoethylethanolamine, and M' is H, Li, Na, K, ammonium or $C_1$-$C_4$alkylammonium; a water-insoluble compound of the formula

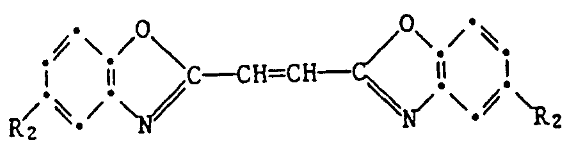

(3)

and/or a compound of the formula

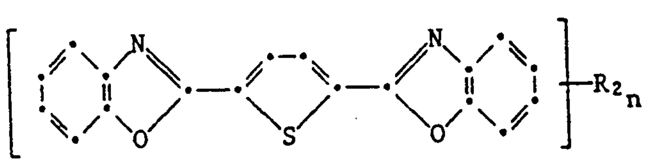

(5)

in which $R_2$ is $C_1$-$C_4$alkyl and n is a number from zero to 2.

**17.** A whitener dispersion according to claim 3, which comprises a mixture of a water-soluble compound of the formula

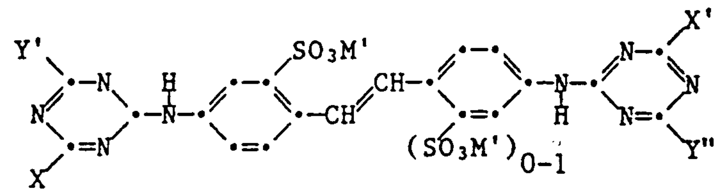

(19)

where

X and X' are aniline, aniline-3-sulfonic acid, aniline-4-sulfonic acid, aniline-2,5-disulfonic acid or salts thereof or methanol, Y' and Y" are aniline, ethanolamine, diethanolamine, N-methylethanolamine, diisopropanolamine, ethylamine, diethylamine, morpholine, diethylene glycol, propylene glycol, aminoethanesulfonic acid or salts thereof, ethanolaminopropionamide, cyanoethylbenzylamine or cyanoethylethanolamine, and M' is H, Li, Na, K, ammonium or $C_1$-$C_4$ alkylammonium; a water-insoluble compound of the formula

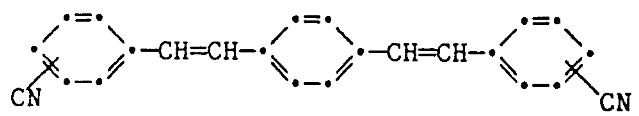

and/or a compound of the formula

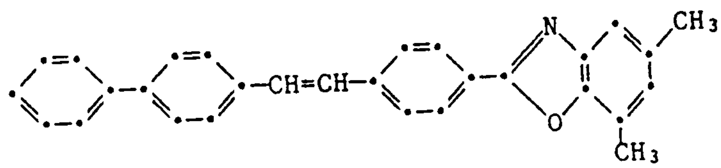

**18.** A whitener dispersion according to claim 3, which comprises a mixture of a water-soluble compound of the formula

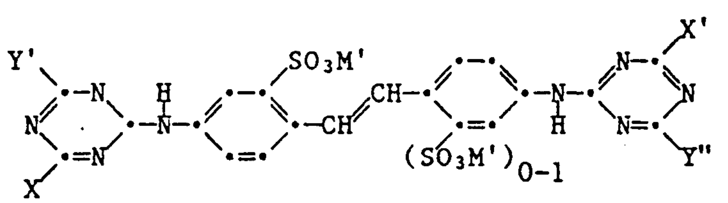

(19)

where

X and X' are aniline, aniline-3-sulfonic acid, aniline-4-sulfonic acid, aniline-2,5-disulfonic acid or salts thereof or methanol, Y' and Y" are aniline, ethanolamine, diethanolamine, N-methylethanolamine, diisopropanolamine, ethylamine, diethylamine, morpholine, diethylene glycol, propylene glycol, aminoethanesulfonic acid or salts thereof, ethanolaminopropionamide, cyanoethylbenzylamine or cyanoethylethanolamine, and M' is H, Li, Na, K, ammonium or $C_1C_4$ alkylammonium; a water-insoluble compound of the formula

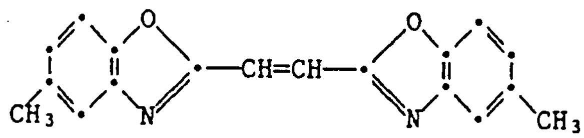

and a compound of the formula

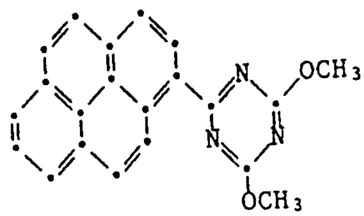

**19.** A whitener dispersion according to claim 3, which comprises a water-insoluble compound of the formula

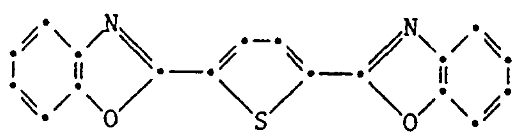

and a water-soluble compound of the formula

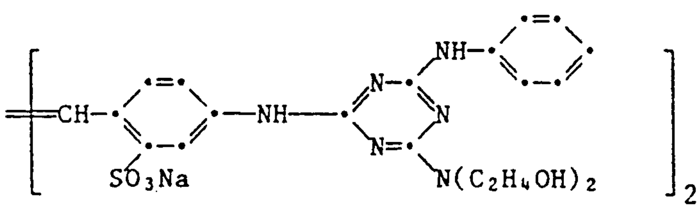

**20.** A dispersion according to claim 1, which comprises 5-10% of water-insoluble to sparingly soluble fluorescent whitening agent selected from the class consisting of the bis(benzoxazolyl)thiophene whitening agents, 4-10% of water-soluble fluorescent whitening agent selected from the class consisting of the bis(triazinyl)diaminostilbenedisulfonic acid whitening agents, 2-5% of ethoxylated $C_{16}$-$C_{18}$ fatty alcohol or ethylene oxide/propylene oxide block polymer as dispersant, 3-6% of a copolymer of 1-vinyl-2-pyrrolidone and 3-vinylpropionic acid, and 14-16% of polyethylene glycol or 10-25% of urea as solubiliser, 0-0.5% of shading dye and 0.1-0.5% of formaldehyde as further assistants.

**21.** A process for the preparation of an aqueous whitener dispersion according to claim 1, which comprises homogenising at least one water-insoluble or sparingly soluble fluorescent whitening agent and at least one water-soluble fluorescent whitening agent with at least one anionic, cationic and/or non-ionic dispersant; a solubiliser, a copolymer of 1-vinyl-2-pyrrolidone and 3-vinylpropionic acid, as well as further assistants and water, a) by mixing the separately prepared and formulated individual components or b) by jointly formulating the individual components.

**22.** Use of the whitener dispersion according to claim 1 for whitening polyester/cellulose fibre material.

**23.** Use according to claim 22 carried out as a single step exhaust process.

## Revendications

1. Dispersions aqueuses d'azurants optiques contenant :
de 3 à 20 % d'au moins un azurant optique insoluble ou peu soluble dans l'eau,
de 4 à 20 % d'au moins un azurant optique soluble dans l'eau,
de 5 à 25 % d'un tiers-solvant,
de 2 à 20 % d'au moins un agent dispersant anionique, cationique et/ou non-ionique,
de 0,1 à 10 % d'autres adjuvants, et en outre
de 1 à 20 % d'un copolymère de 1-vinyl-2-pyrrolidone et d'acide 3-vinylpropionique.

2. Dispersion d'azurants optiques conforme à la revendication 1, caractérisée en ce qu'elle contient de 5 à 10 % d'azurant optique insoluble ou peu soluble dans l'eau, de 4 à 10 % d'azurant optique soluble dans l'eau, de 2 à 5 % d'agent dispersant, de 10 à 25 % de tiers-solvant, de 3 à 6 % de copolymère de 1-vinyl-2-pyrrolidone et d'acide 3-vinylpropionique, et de 0,1 à 5 % d'autres adjuvants.

3. Dispersion d'azurants optiques conforme à la revendication 1, caractérisée en ce qu elle contient, en tant qu'azurants optiques insolubles ou peu solubles dans l'eau, des composés ou des mélanges de composés des classes des stilbènes, distyrylbenzènes, distyrylbiphényles, triazinyles, benzoxazoles, bis-benzoxazoles, bis-benzoxazolyl-thiophènes, bis-benzoxazolyl-naphtalènes, pyrènes, coumarines et naphtalène-péri-dicarbimides, et en tant qu'azurants optiques hydrosolubles, des composés ou des mélanges de composés des classes des bis-triazinyl-diaminostilbènes, distyryl-biphényles et triazolyl-stilbènes.

4. Dispersion d'azurants optiques conforme à la revendication 3, caractérisée en ce qu'elle contient, en tant qu'azurant optique insoluble ou peu soluble dans l'eau, au moins un composé de formule

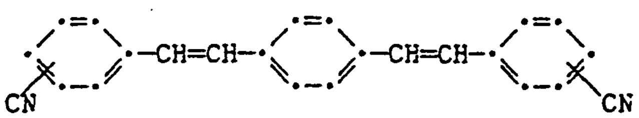

(1)

5. Dispersion d'azurants optiques conforme à la revendication 3, caractérisée en ce qu'elle contient, en tant qu'azurant optique insoluble ou peu soluble dans l'eau, au moins un composé de formule

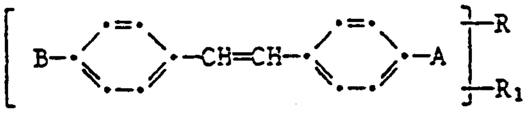

(2)

dans laquelle
A représente un atome d'halogène ou un groupe 2-benzoxazolyle, -CH = CH-CN, -CH = CH-COOR$_2$ ou -COOR$_2$,
B représente un groupe phényle si A représente un groupe 2-benzoxazolyle,
B représente un groupe -CH = CH-CN si A représente un groupe -CH = CH-CN,
B représente un groupe -CH = CH-COOR$_2$ si A représente un groupe -CH = CH-COOR$_2$,
B représente un groupe 2-benzoxazolyle si A représente un groupe -COOR$_2$,
B représente un groupe naphtalène-triazolyle si A représente un atome d'halogène ou un groupe -COOR$_2$,
B représente un groupe 1,2,4-oxadiazolyle si A représente un groupe 2-benzoxazolyle,
et R représente un atome d'hydrogène ou un groupe alkyle en $C_1$-$C_4$, $R_1$ représente un atome d'hydrogène ou un groupe alkyle en $C_1$-$C_4$ ou -CN, et $R_2$ représente un groupe alkyle en $C_1$-$C_4$.

6. Dispersion d'azurants optiques conforme à la revendication 3, caractérisée en ce qu'elle contient, en tant qu'azurant optique insoluble ou peu soluble dans l'eau, un composé de formule

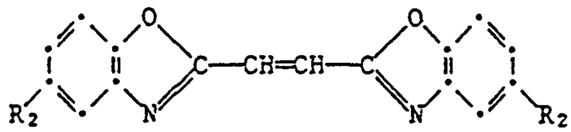

(3)

dans laquelle $R_2$ représente un groupe alkyle en $C_1$-$C_4$.

**7.** Dispersion d'azurants optiques conforme à la revendication 3, caractérisée en ce qu'elle contient, en tant qu'azurant optique insoluble ou peu soluble dans l'eau, un composé de formule

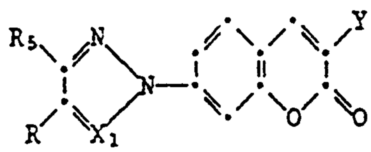

(4)

dans laquelle $R_5$ représente un groupe alkyle en $C_1$-$C_4$ ou phényle, R représente un atome d'hydrogène ou un groupe alkyle en $C_1$-$C_4$, $X_1$ représente un atome de carbone ou d'azote et Y représente un groupe phényle ou groupe de formule

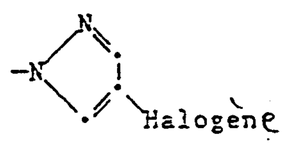

**8.** Dispersion d'azurants optiques conforme à la revendication 3, caractérisée en ce qu'elle contient, en tant qu'azurant optique insoluble ou peu soluble dans l'eau, un composé de formule

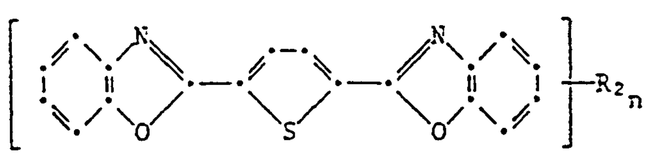

(5)

dans laquelle n représente un nombre valant de 0 à 2 et $R_2$ représente un groupe alkyle en $C_1$-$C_4$.

**9.** Dispersion d'azurants optiques conforme à la revendication 3, caractérisée en ce qu'elle contient, en tant qu'azurant optique insoluble ou peu soluble dans l'eau, un composé de formule

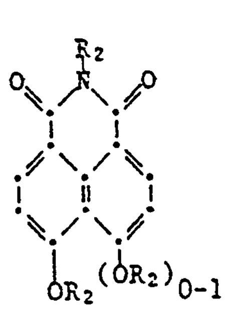

(6)

dans laquelle $R_2$ représente un groupe alkyle en $C_1$-$C_4$.

**10.** Dispersion d'azurants optiques conforme à la revendication 3, caractérisée en ce qu'elle contient, en tant qu'azurant optique insoluble ou peu soluble dans l'eau, un composé de formule

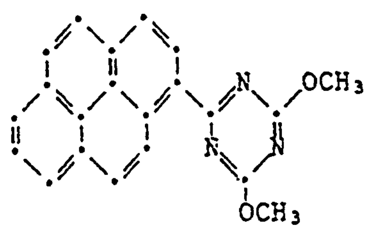

(7)

**11.** Dispersion d'azurants optiques conforme à la revendication 3, caractérisée en ce qu'elle contient, en tant qu'azurant optique insoluble ou peu soluble dans l'eau, un composé de formule

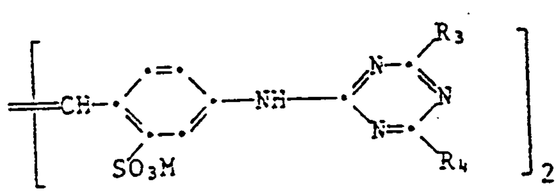

(18)

avec $R_3$ = $R_4$ = 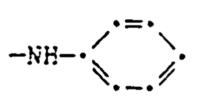 ou

$R_3$ = 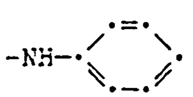 et $R_4$ = 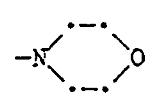

et

M = Na, Li, K ou ammonium.

**12.** Dispersion d'azurants optiques conforme à la revendication 3, caractérisée en ce qu'elle contient, en tant qu'azurant optique insoluble ou peu soluble dans l'eau, un composé de formule

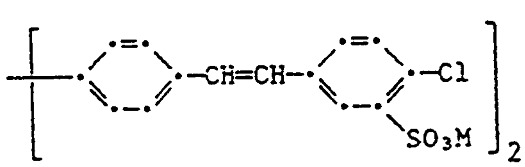

(17)

avec

M = Li, Na ou K.

**13.** Dispersion d'azurants optiques conforme à la revendication 3, caractérisée en ce qu'elle contient, en tant qu'azurant optique soluble dans l'eau, un composé de formule

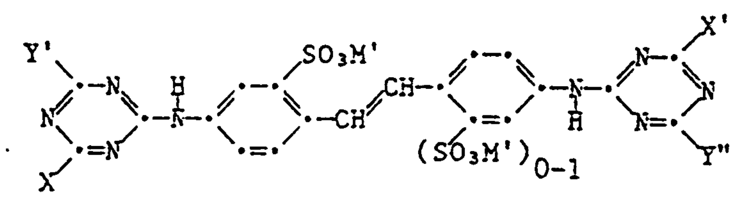

(19)

dans laquelle
X et X' représentent des restes de méthanol, d'aniline, d'acide aniline-3-sulfonique, d'acide aniline-4-sulfonique, d'acide aniline-2,5-disulfonique ou de sels de ceux-ci,
Y' et Y" représentent des restes d'aniline, d'éthanolamine, de diéthanolamine, de N-méthyl-éthanolamine, de diisopropanolamine, d'éthylamine, de diéthylamine, de morpholine, de diéthylèneglycol, de propylèneglycol, d'acide aminoéthane-sulfonique ou de sels de ceux-ci, d'éthanolaminopropionamide, de cyanoéthyl-benzylamine ou de cyanoéthyl-éthanolamine, et
M' représente un atome d'hydrogène, de lithium, de sodium ou de potassium ou un groupe ammonium ou (alkyl en $C_1$-$C_4$)-ammonium.

**14.** Dispersion d'azurants optiques conforme à la revendication 3, caractérisée en ce qu'elle contient, en tant qu'azurant optique soluble dans l'eau, un composé de formule

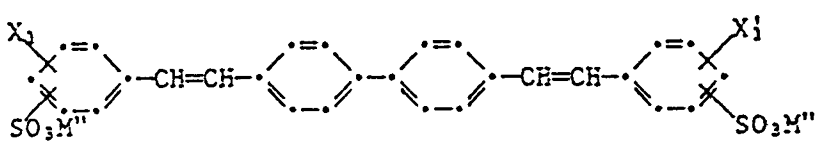

(20)

dans laquelle $X_1$ et $X'_1$ représentent chacun un atome d'hydrogène ou de chlore et M" représente un atome d'hydrogène, un groupe ammonium ou un groupe (alkyl en $C_1$-$C_4$)-ammonium, ou éventuellement un atome de lithium, de sodium ou de potassium.

**15.** Dispersion d'azurants optiques conforme à la revendication 3, caractérisée en ce qu'elle contient, en tant qu'azurant optique soluble dans l'eau, un composé de formule

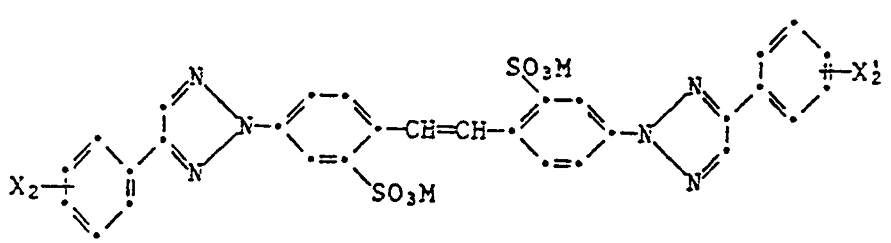

(21)

dans laquelle $X_2$ et $X'_2$ représentent chacun un atome d'hydrogène ou un groupe $SO_3M$, M représentant un atome de lithium, de sodium ou de potassium ou un groupe ammonium ou (alkyl en $C_1$-$C_4$)-ammonium.

**16.** Dispersion d'azurants optiques conforme à la revendication 3, caractérisée en ce qu'elle contient un mélange de composés hydrosolubles de formule

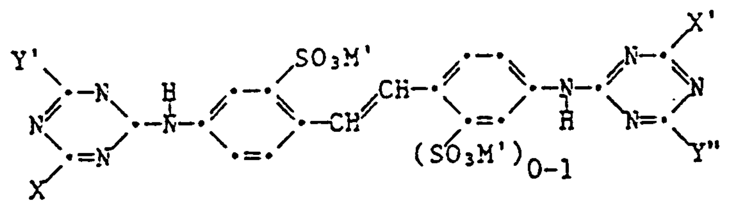

(19)

dans laquelle
X et X' représentent des restes de méthanol, d'aniline, d'acide aniline-3-sulfonique, d'acide aniline-4-sulfonique, d'acide aniline-2,5-disulfonique ou de sels de ceux-ci,
Y' et Y" représentent des restes d'aniline, d'éthanolamine, de diéthanolamine, de N-méthyl-éthanolamine, de diisopropanolamine, d'éthylamine, de diéthylamine, de morpholine, de diéthylèneglycol, de propylèneglycol, d'acide aminoéthane-sulfonique ou de sels de ceux-ci, d'éthanolaminopropionamide, de cyanoéthyl-benzylamine ou de cyanoéthyl-éthanolamine, et
M' représente un atome d'hydrogène, de lithium, de sodium ou de potassium ou un groupe ammonium ou (alkyl en $C_1$-$C_4$)-ammonium,
et de composés insolubles dans l'eau, de formule

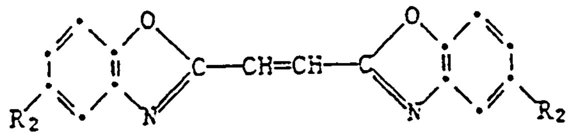

(3)

et/ou de composés de formule

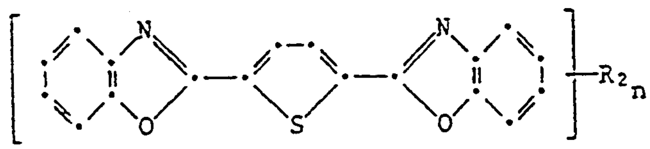

(5)

dans lesquelles formules $R_2$ représente un groupe alkyle en $C_1$-$C_4$ et n représente un nombre valant de 0 à 2.

**17.** Dispersion d'azurants optiques conforme à la revendication 3, caractérisée en ce qu'elle contient un mélange de composés hydrosolubles de formule

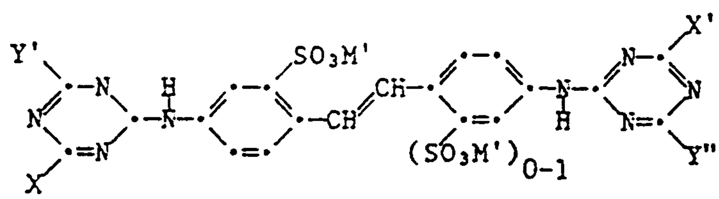

(19)

dans laquelle
X et X' représentent des restes de méthanol, d'aniline, d'acide aniline-3-sulfonique, d'acide aniline-4-sulfonique, d'acide aniline-2,5-disulfonique ou de sels de ceux-ci,
Y' et Y" représentent des restes d'aniline, d'éthanolamine, de diéthanolamine, de N-méthyl-éthanolamine, de diisopropanolamine, d'éthylamine, de diéthylamine, de morpholine, de diéthylèneglycol, de propylèneglycol, d'acide aminoéthane-sulfonique ou de sels de ceux-ci, d'éthanolaminopropionamide, de cyanoéthyl-benzylamine ou de cyanoéthyl-éthanolamine, et

M' représente un atome d'hydrogène, de lithium, de sodium ou de potassium ou un groupe ammonium ou (alkyl en $C_1$-$C_4$)-ammonium,
et de composés insolubles dans l'eau, de formule

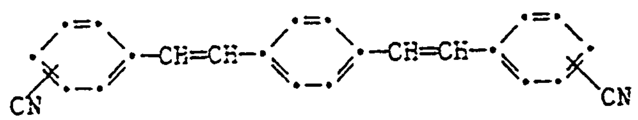

et/ou d'un composé de formule

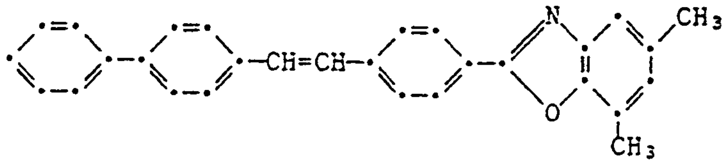

**18.** Dispersion d'azurants optiques conforme à la revendication 3, caractérisée en ce qu'elle contient un mélange de composés hydrosolubles de formule

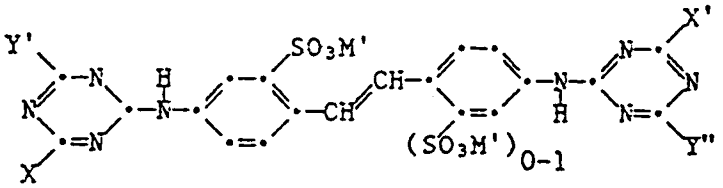

(19)

dans laquelle
X et X' représentent des restes de méthanol, d'aniline, d'acide aniline-3-sulfonique, d'acide aniline-4-sulfonique, d'acide aniline-2,5-disulfonique ou de sels de ceux-ci,
Y' et Y" représentent des restes d'aniline, d'éthanolamine, de diéthanolamine, de N-méthyl-éthanolamine, de diisopropanolamine, d'éthylamine, de diéthylamine, de morpholine, de diéthylèneglycol, de propylèneglycol, d'acide aminoéthane-sulfonique ou de sels de ceux-ci, d'éthanolaminopropionamide, de cyanoéthyl-benzylamine ou de cyanoéthyl-éthanolamine, et
M' représente un atome d'hydrogène, de lithium, de sodium ou de potassium ou un groupe ammonium ou (alkyl en $C_1$-$C_4$)-ammonium,
et d'un composé insoluble dans l'eau, de formule

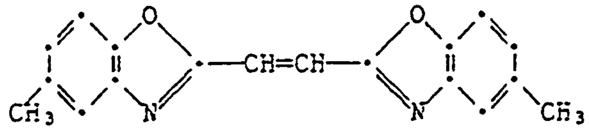

et d'un composé de formule

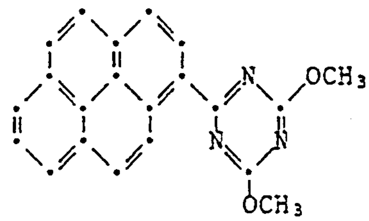

**19.** Dispersion d'azurants optiques conforme à la revendication 3, caractérisée en ce qu'elle contient un composé insoluble dans l'eau, de formule

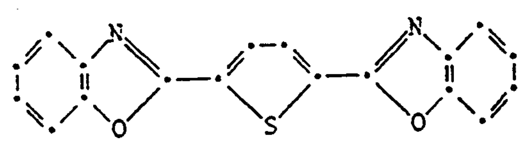

et un composé hydrosoluble de formule

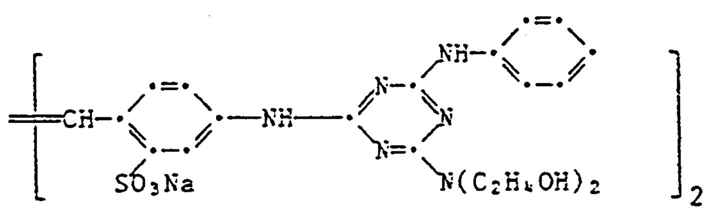

**20.** Dispersion d'azurants optiques conforme à la revendication 1, caractérisée en ce qu'elle contient de 5 à 10 % d'azurant optique insoluble ou peu soluble dans l'eau, de la classe des azurants bis-benzoxazolylthiophènes, de 4 à 10 % d'azurant optique hydrosoluble de la classe des azurants acide bistriazinyldiaminostilbènedisulfonique, de 2 à 5 % d'alcool gras en $C_{16}$-$C_{18}$ éthoxylé ou de copolymère séquencé d'oxyde d'éthylène et d'oxyde de propylène, en tant qu'agent dispersant, de 3 à 6 % d'un copolymère de 1-vinyl-2-pyrrolidone et d'acide 3-vinylpropionique, de 14 à 16 % de polyéthylèneglycol ou de 10 à 25 % d'urée en tant que tiers-solvant, de 0 à 0,5 % d'un colorant de nuançage et de 0,1 à 0,5 % de formaldéhyde, en tant qu'autres adjuvants.

**21.** Procédé de préparation d'une dispersion aqueuse d'azurants optiques conforme à la revendication 1, caractérisé en ce que l'on homogénéise au moins un azurant optique insoluble ou peu soluble dans l'eau et au moins un azurant optique hydrosoluble, avec au moins un agent dispersant anionique, cationique ou non-ionique, un tiers-solvant, un copolymère de 1-vinyl-2-pyrrolidone et d'acide 3-vinylpropionique, d'autres adjuvants et de l'eau,

a) en mélangeant les divers composants préparés et mis en forme séparément, ou

b) par mise en forme conjointe des divers composants.

**22.** Utilisation de la dispersion d'azurants optiques conforme à la revendication 1 pour l'azurage optique de matériaux en fibres de cellulose/polyester.

**23.** Utilisation conforme à la revendication 22, dans un procédé d'épuisement en une étape.